(19) Europäisches Patentamt
European Patent Office
Office européen des brevets

(11) EP 4 392 255 B1

(12) **EUROPEAN PATENT SPECIFICATION**

(45) Date of publication and mention of the grant of the patent:
**22.07.2026 Bulletin 2026/30**

(21) Application number: **22777063.3**

(22) Date of filing: **25.08.2022**

(51) International Patent Classification (IPC):
***B32B 27/40*** *(2006.01)* ***C08G 18/10*** *(2006.01)*
***C08G 18/32*** *(2006.01)* ***B32B 7/12*** *(2006.01)*
***B32B 27/30*** *(2006.01)* ***C08G 18/42*** *(2006.01)*
***C08G 18/75*** *(2006.01)* ***C08J 5/18*** *(2006.01)*
***C08L 29/14*** *(2006.01)* ***C08L 67/02*** *(2006.01)*
***C08L 75/06*** *(2006.01)*

(52) Cooperative Patent Classification (CPC):
(C-Sets available)
**C08G 18/4277; B32B 7/12; B32B 27/304; B32B 27/306; B32B 27/40; C08G 18/10; C08G 18/3206; C08G 18/758; C08J 5/18; C08L 75/06;** B32B 2270/00; B32B 2307/30; B32B 2307/4023; B32B 2307/4026; B32B 2307/732;
(Cont.)

(86) International application number:
**PCT/US2022/041468**

(87) International publication number:
**WO 2023/028198 (02.03.2023 Gazette 2023/09)**

# (54) FILMS COMPRISING BLENDS OF POLYURETHANES AND COPOLYESTER ELASTOMERS USEFUL AS AUTO WRAPS

FILME AUS MISCHUNGEN AUS POLYURETHANEN UND COPOLYESTERELASTOMEREN ALS AUTOHÜLLEN

FILMS COMPRENANT DES MÉLANGES DE POLYURÉTHANES ET D'ÉLASTOMÈRES DE COPOLYESTER UTILES EN TANT QU'AUTO-ENVELOPPES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2021 US 202163237709 P**

(43) Date of publication of application:
**03.07.2024 Bulletin 2024/27**

(73) Proprietor: **Eastman Chemical Company**
**Kingsport, TN 37660 (US)**

(72) Inventors:
- **YOUNG, Robert, Erik**
  **Kingsport, TN 37663 (US)**
- **BHAT, Sanmitra, A.**
  **Kingsport, TN 37660 (US)**
- **HAWKINS, Gary, Stuaet**
  **Johnson City, TN 37604 (US)**
- **HOCHSTETLER, Spencer, Erich**
  **Kingsport, TN 37664 (US)**
- **JIN, Yan**
  **Johnson City, TN 37615 (US)**
- **PECORINI, Thomas, Joseph**
  **Kingsport, TN 37663 (US)**
- **SHIH, Wayne, Ken**
  **Kingsport, TN 37664 (US)**

(74) Representative: **Wallinger Ricker Schlotter Tostmann**
**Patent- und Rechtsanwälte Partnerschaft mbB**
**Zweibrückenstraße 5-7**
**80331 München (DE)**

(56) References cited:
**EP-B1- 2 953 792**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **KURARAY: "Product Brochure - Mowital", 1 March 2013 (2013-03-01), XP055975871, Retrieved from the Internet <URL:https://www.ulprospector.com/documents/1177333.pdf> [retrieved on 20221028]**

(52) Cooperative Patent Classification (CPC): (Cont.)
C08J 2375/06; C08J 2429/14; C08J 2467/02

C-Sets
**C08L 75/06, C08L 29/14;**
**C08L 75/06, C08L 67/02**

## Description

## BACKGROUND OF INVENTION

Polyvinyl Chloride (PVC) and Thermoplastic polyurethane (TPU) are two polymers commonly used in automotive protective and restyling films. PVC is more typically found in Automotive Restyling Wraps (ARWs) or autowraps, which are pigmented, and change the whole exterior appearance of the vehicle. By contrast, Paint Protection Films (PPFs) are typically clear and act only as a protective film. TPUs are more commonly used for Paint Protection Films since certain classes of TPU's are well suited to provide impact resistance, abrasion resistance and weatherability.

TPU films used for PPFs do a very good job of protecting the underlying paint from chipping, and their low modulus allows them to be stretched with low force, but their elastic, springy nature can make them difficult for installers to work into complex compound surface geometries and around fully-wrapped edges. PVC films are easier to apply in the above-mentioned challenging areas but the high modulus of PVC films makes them difficult to stretch by a single individual. To compensate for their higher modulus, PVC ARW films are typically made thinner than TPU PPF films. Thin PVC ARW films do not protect underlying paint as well as TPU films; when PVC ARWs are struck with rocks, the films tend to permanently deform compared to TPU-based films. This decreased film durability can lead to shorter acceptable lifetimes of such products.

Both types of films are typically relatively easy to remove, which is a desirable feature for customers, in that they enjoy the benefits of the films, and if they should decide to remove them at some point in the future to change the style of their car again, the underlying paint can be unharmed by the product. EP2953792B1 describes an article comprising a film layer made of a polymer blend of thermoplastic polyurethane and polyvinyl butyral, an adhesive layer adjacent to the film layer, and an image on the film layer, designed for use as a graphic film on irregular or uneven surfaces with good outdoor weatherability and conformability.

Most commercial PVC-based automotive restyling wrap films are applied without the use of a water-based solution or gel between the pressure sensitive adhesive layer of the film and the car. To prevent air entrapment and bubbles, PVC ARWs typically achieve air egress through the use of interconnected, micro-scale air channels formed in the pressure sensitive adhesive layer during the film manufacturing process. A disadvantage of such a dry installation technique is that initial tack can prevent residual film stresses from being more widely distributed over the length of the ARW, which can lead to high localized residual stresses in the film. One way to mitigate this problem is to use chemical adhesion promoters at the edges of a piece of installed film between the car and the pressure sensitive adhesive, to increase peel adhesion strength and prevent adhesive failure in high strain regions. This mitigation technique has a serious drawback, in that excessive and tenaciously bound adhesive residue can remain on the car after the film is removed. To remove this undesired residue, aggressive chemical or mechanical means may be required, which can be labor and time-intensive and presents risk of damaging the underlying paint. Another way to mitigate residual internal film stress in ARWs is to apply heat to the film after installation to a sufficiently high temperature to relieve internal stresses so as to prevent adhesion failure between the car and the pressure sensitive adhesive.

By contrast, the common method of installing PPF is to apply water or a water-based solution that may contain a soap additive to the surface of the car and/or the surface of the paint protective film's exposed pressure sensitive adhesive layer that will be applied to the car. This allows for a number of conveniences during installation, including air egress of trapped air bubbles when the film is pressed into position with a squeegee, for example. This also allows the film to be more easily repositioned during the installation. Further, the addition of a water-containing solution or gel between the car and the paint protective film can enable the film to stretch more uniformly over a given area of film, by allowing the film to stretch slightly as a squeegee is applied in a lateral direction across the film during installation, which can distribute the residual film stress of the stretched film somewhat uniformly over the length of the film. This can help prevent areas of high strain, which can lead to adhesive failure between the car surface and the pressure sensitive adhesive so that the film is no longer securely bonded to the car, particularly at the edges, due to the highly elastic nature of the films.

One disadvantage of using water-based installation solutions is that the installation area may become wet and slippery, which can create inconveniences in the work area. Another disadvantage of using water-based installation solutions is that the solution may prevent sufficient initial tack to stay bonded to the car in certain areas with high degrees of conformability requirements, surface geometries with complex shapes, or at the edge of a body panel where the installer is required to completely wrap the film from the top surface of the car around to the underside of a car part. The edges of car hoods, trunk lid, fender wells, and door panels are examples of such areas. To accommodate the lack of initial tack of a wetted adhesive layer, the installer will typically let the film dry or take steps to actively dry the water from the film and car surface before applying to the edge of such areas, or use a tack solution that increases the tackiness of the PSA where applied. These extra steps in the installation process can lead to an increase of time required to perform an installation which can increase labor costs, decrease installation throughput, and even decrease profitability for an installer.

It would be desirable to have a film that provides improved ease of installation, durability, weatherability and paint protection compared to a PVC automotive restyling wrap. Such a film would be easily installed onto both simple and

complex car surface geometries and remain sufficiently bonded to the car without the required use of adhesion promoter chemicals.

There thus remains a need for a film that has increased paint chip resistance over PVC films while being easier to stretch than PVC films; exhibits less elastic recovery than TPU films during installation, while exhibiting satisfactory elastic recovery long after installation so that plastic deformation from a rock strike can recover with time. Further, it would be desirable to have a stretched film that minimizes residual stress such that, even when heated unevenly, the film will have a sufficiently low residual stress so that the film will have a broader range of acceptability for variation in installer's procedures. Further, PVC films contain halogens; thus, for environmental reasons, it would be advantageous to have little or no halogen content while providing a film with the above-noted tensile properties. Further, there remains a need for a film that has the improvements mentioned above, that can be installed without the need for a slip solution, so that higher strains can be achieved, and installation can be faster than TPU protective films over complicated surfaces. Finally, there remains a need for a film that combines all of the improvements mentioned above that enables a fast, easy, reliable, and complete wrap-around coverage of the edges of a vehicles' body panels without the need for relief cuts that may expose the vehicle's underlying paint, which if the film is used as a color-change film, would be aesthetically undesirable.

## SUMMARY OF THE INVENTION

In one aspect, the present invention relates to thermoplastic films that include a thermoplastic polymer layer and a patterned adhesive layer. The thermoplastic polymer layer comprises a thermoplastic polyurethane polymer comprising the reaction product of: an aliphatic diisocyanate, an aliphatic polyol, and a chain extending agent; and a copolyester polyether polymer comprising the reaction product of: an aliphatic diacid; an aliphatic diol, an aliphatic polyether polyol, and a branching agent. The thermoplastic polyurethane polymer may be present in the thermoplastic polymer layer in an amount from about 65 to about 98 percent by weight; and the thermoplastic film: when tested by a 25% Heat Relaxation Test at a thickness of about 0.006 inches, exhibits a final load from about 0.02 to about 0.30 pounds force; and when tested by a 25% Elastic Recovery test, exhibits a residual strain at one minute of 2% or greater.

The films of the invention have improved rock resistance over PVC films, are as easy or easier to stretch than thinner, less protective PVC films, and exhibit desirable elastic recovery properties, while maintaining similar residual force when stretched and heated above the glass transition temperature. Further aspects of the invention are as disclosed and claimed herein.

## DETAILED DESCRIPTION

In a first embodiment, the invention relates to thermoplastic films that comprise: a thermoplastic polymer layer comprising: a thermoplastic polyurethane polymer comprising the reaction product of: an aliphatic diisocyanate, an aliphatic polyol, and a chain extending agent; and a copolyester polyether polymer comprising the reaction product of: an aliphatic diacid; an aliphatic diol; an aliphatic polyether polyol; and a branching agent, wherein the thermoplastic polyurethane polymer is present in the thermoplastic polymer layer in an amount from about 65 to about 98 percent by weight. The thermoplastic films further comprise a patterned adhesive layer. The thermoplastic film, when tested by a 25% Heat Relaxation Test at a thickness of about 0.006 inches, exhibits a final load from about 0.05 to about 0.30 pounds force; and when tested by a 25% Elastic Recovery test, exhibits a residual strain at one minute of 2% or greater.

In a second embodiment, according to the first embodiment, the thermoplastic film, when tested by ASTM D-412, exhibits a stress at 5% strain of no greater than 700 psi.

In a third embodiment, according to any of the preceding embodiments, the thermoplastic film, when tested by ASTM D-412, exhibits a stress at 5% strain of from about 200 to about 700 psi.

In a fourth embodiment, according to any of the preceding embodiments, the thermoplastic film, when tested by a 25% Heat Relaxation Test at a thickness of about 0.006 inches, exhibits a final load from about 0.10 to about 0.20 pounds force.

In a fifth embodiment, according to any of the preceding embodiments, the thermoplastic film, when tested by a 25% Elastic Recovery test, exhibits a residual strain at one minute from 2% to 15%.

In a sixth embodiment, according to any of the preceding embodiments, the thermoplastic film, when tested by an Impact Force Attenuation Test, exhibits an attenuated load, and when tested by ASTM D-412, exhibits a tensile load per inch at 5% strain, and wherein a ratio of the attenuated load to the tensile load per inch at 5% strain is at least 80:1.

In a seventh embodiment, according to any of the preceding embodiments, the thermoplastic film, when tested by an Impact Force Attenuation Test, exhibits an attenuated load, and when tested by ASTM D-412, exhibits a tensile load per inch at 5% strain, and wherein a ratio of the attenuated load to the tensile load per inch at 5% strain is from about 80:1 to about 300:1.

In an eighth embodiment, according to any of the preceding embodiments, the polymer blend, when tested to the 50% Relaxation Test, exhibits a deformation set of from about 25% to about 50%.

In a ninth embodiment, according to any of the preceding embodiments, the thermoplastic polyurethane polymer comprises a soft segment and a hard segment, and wherein the soft segment comprises from about 40 to about 50 percent by weight of the thermoplastic polyurethane polymer.

In a tenth embodiment, according to any of the preceding embodiments, the copolyester polyether polymer comprises poly(cyclohexylene dimethylene cyclohexanedicarboxylate), glycol and acid comonomer (PCCE).

In an eleventh embodiment, according to any of the preceding embodiments, the thermoplastic polyurethane polymer is present in the thermoplastic polymer layer in an amount from about 70 to about 97 percent by weight.

In a twelfth embodiment, according to any of the preceding embodiments, the thermoplastic polyurethane layer further comprises one or more of: an aliphatic polyether thermoplastic polyurethane; ethylene vinyl acetate (EVA); polyvinyl chloride; a thermoplastic polyamide, a thermoplastic polyolefin elastomer, a thermoplastic styrene block copolymer; an aromatic thermoplastic copolyester ether elastomer; or a polyvinyl acetal.

In a thirteenth embodiment, according to any of the preceding embodiments, the thermoplastic film is visually clear.

In a fourteenth embodiment, according to any of the preceding embodiments, the thermoplastic polyurethane is present in the thermoplastic polymer layer in an amount from about 75 to about 95 percent by weight.

In a fifteenth embodiment, according to any of the preceding embodiments, the aliphatic diisocyanate comprises at least 80 mol% of one or more of 4,4'-Methylene dicyclohexyl diisocyanate, hexamethylene diisocyanate, or isophorone diisocyanate.

In a sixteenth embodiment, according to any of the preceding embodiments, the aliphatic polyol of the thermoplastic polyurethane polymer has a Mw from about 750 to about 2,000.

In a seventeenth embodiment, according to any of the preceding embodiments, the aliphatic polyol of the thermoplastic polyurethane polymer comprises an aliphatic polycaprolactone polyol.

In an eighteenth embodiment, according to any of the preceding embodiments, the aliphatic polyol comprises an aliphatic polyether polyol.

In a nineteenth embodiment, according to any of the preceding embodiments, the chain extending agent comprises a diol having from two to ten carbon atoms.

In a twentieth embodiment, according to any of the preceding embodiments, the thermoplastic polyurethane polymer or thermoplastic polyurethane polymer blend has a Tg from about -30ºC to about 60º C.

In a twenty-first embodiment, according to any of the preceding embodiments, the thermoplastic polyurethane has a weight average molecular weight from 50,000 daltons to 400,000 daltons.

In a twenty-second embodiment, according to any of the preceding embodiments, the thermoplastic polyurethane polymer comprises residues of hexamethylene diisocyanate, 1,4-butanediol, and caprolactone.

In a twenty-third embodiment, according to any of the preceding embodiments, the chain extending agent comprises 1,4-butanediol.

In a twenty-fourth embodiment, according to any of the preceding embodiments, the thermoplastic film further comprises a protective topcoat on a side of the film opposite the patterned adhesive layer.

In a twenty-fifth embodiment, according to any of the preceding embodiments, the thermoplastic film has a thickness from about 50 to about 300 microns.

In a twenty-sixth embodiment, according to any of the preceding embodiments, the copolyester polyether polymer has a Tg from about -70C to about 50C.

In a twenty-seventh embodiment, according to any of the preceding embodiments, the copolyester polyether polymer has an inherent viscosity (IhV) from about 0.85 to about 1.40.

In a twenty-eighth embodiment, according to any of the preceding embodiments, the aliphatic diacid of the copolyester polyether polymer comprises cyclohexane dicarboxylic acid.

In a twenty-ninth embodiment, according to any of the preceding embodiments, the aliphatic diol in the copolyester polyether polymer comprises cyclohexane dimethanol.

In a thirtieth embodiment, according to any of the preceding embodiments, the branching agent in the copolyester polyether polymer comprises trimellitic anhydride.

In a thirty-first embodiment, the invention relates to an article coated with the thermoplastic film of any of the preceding embodiments.

In a thirty-second embodiment, the article comprises one or more of an automobile, a truck, or a train.

In a thirty-third embodiment, the invention relates to a method of applying the thermoplastic film of any of the preceding embodiments to a substrate, the method comprising:

a. exposing the patterned adhesive layer;
b. tacking the patterned adhesive layer of the thermoplastic film to at least one location on the substrate;
c. stretching the thermoplastic film and tacking the patterned adhesive layer to another location on the substrate;
d. smoothing out the thermoplastic film using one or more of a hand, a gloved hand, or a squeegee so that the

thermoplastic film conforms to the substrate; and
e. wrapping the thermoplastic film around at least one edge of the substrate so as to hide an underlying color of the substrate.

In a thirty-fourth embodiment, the thermoplastic film is heated during the method.

In a thirty-fifth embodiment, according to any of the preceding methods, the thermoplastic film is heated after the thermoplastic film is applied to the substrate, to accomplish one or more of: setting the film in place, reducing tension, or preventing post-application separation.

In a thirty-sixth embodiment, in a method according to any of the preceding embodiments, the at least one location on the substrate is near a middle of the substrate.

The invention thus relates to films, polymers, and blends useful as autowraps that have improved properties over both traditional Polyvinyl Chloride (PVC) autowraps and Thermoplastic Polyurethane (TPU) PPF films.

In one aspect, the films of the invention may be colored. The color may be provided, for example, as a pigment in the thermoplastic substrate itself, or may be provided, for example in the patterned adhesive layer. Alternatively, the films of the invention may include one or more colored layers to color the surface to which the films are applied. Similarly, the films of the invention may comprise a colored layer as well as a colorant or pigment in the substrate and/or the patterned adhesive layer.

PVC films containing various modifiers such as pigments, flakes, and other particles are commonly used as automotive restyling films. To apply the film, the PSA is exposed by removing a silicone-coated release liner and certain locations of the PVC film are "tacked" to the vehicle and an installer uses their hand, a squeegee or other tools to smooth out the film so that it conforms to the car body. Typically, an installer adheres one area of the film to the car surface, grabs another section of the film with his hand, and then presses (squeegees) the film onto the remaining car surface, stretching the film as it passes over contours in the surface. The PVC film may be further stretched during the application of the film so that bunching and creasing is minimized or eliminated or so that the film covers more surface area than it would in its unstretched state. Considering that these films are stretched manually, there is an upper limit to the force that can be tolerated by an installer to stretch the film. The force required to stretch a film can readily be measured using a standard tensile test. In such a test, a film is stretched at a constant rate of deformation, and the load is recorded as a function of deformation. This deformation can be readily converted into a strain value. The higher the load (normalized to load per inch of width) at a certain given value of strain, the more difficult it is to stretch. Stretchability is a function of both the composition and thickness of the film.

It is also important for the film to not snap back and recover its original length too quickly after being stretched. This allows the installer to more-easily work (position) the film around complicated corners and shapes before he presses the film to adhere it to the surface. The property that governs the workability of a film is its elastic recovery, which may be measured as residual strain. Elastic recovery is defined as the residual strain on a film at a certain time after the load is released. It is preferred that films possess at least some residual strain up to a minute after load is released, which may be referred to as initial strain. In this regard, highly elastic materials, such as TPUs commonly used in PPF films that have low levels of residual strain at one minute (i.e. fast rates of "snap-back"), are not desirable, even though they are superior to PVC films with regards to stretchability and rock resistance. Regardless, it is desirable for any strain on the film to eventually recover to zero, for example at 24 hours after stretching.

The thickness of the film also plays a role in the primary function of the film in protecting the paint from rock impacts; the thicker the film, the better it protects the underlying paint from chips and other types of mechanical damage. Because the thickness of a film is related to the amount of paint chip protection it can provide, in some cases a thicker film is desired. Paint chipping due to flying rocks is related to the amount of impact force imparted by the rock. This is a direct function of the mass times speed of the rock (impact energy). Reducing (i.e. attenuating) that force will prevent chipping. Thus, the role of a conventional PPF laminate is to attenuate (absorb) as much of the impact force of the flying rock as possible. Although force can be attenuated by both plastic and elastic deformation, it is desirable for a PPF application to maintain the appearance of the car as long as possible. Thus, elastic materials are preferred as substrates over plastic materials since elastic materials will not leave an impact deformation.

Impact force can be easily measured using a piezoelectric dynamic force sensor. These sensors contain a piezoelectric crystal that convert deformation into an electric signal that is proportional to the deformation. When force is applied to this sensor, the quartz crystals generate an electrostatic charge proportional to the input force. This output is collected on the electrodes sandwiched between the crystals and is then either routed directly to an external charge amplifier or converted to a low impedance voltage signal within the sensor. The force measured when a rock impacts the sensor can be measured both with and without an applied PPF film and the amount of attenuated load can be easily determined by comparing the two values.

Since high chip resistance with good stretchability is desirable, this combined property can be measured by comparing the ratio of load attenuation (high is good) to tensile stress per inch (low is good). The higher this ratio, the better. Compositions that simultaneously provide high load attenuation along with low load per inch at a given thickness are highly

desirable.

In addition to having a low tensile load (being easier to stretch), it is also important for the film to remain in place even when stretched over very tight features. If enough residual (final) load remains, the PSA may fail to hold the film in place over time and the underlying paint is exposed, which is considered a failure mode. To decrease the amount of residual load, PVC film manufacturers recommend applying some amount of heat to the film with a heat gun or similar tool after the film is completely installed. By relieving the residual load with heat, the PSA is better able to hold the film in the desired position and prevent failure. The residual load can be measured by stretching the film to a fixed strain (deformation) in a tensile tester, holding at that strain for a few minutes to see how much load is reduced, and then heating the film while still holding at that strain to see how much further the load is reduced. At the end of heating, the residual load should be low.

The pressure sensitive adhesive (PSA) layer that is used to bond the PVC film to the vehicle is a patterned PSA that incorporates interconnected air channels, texture, and/or other non-adhesive features that allow air egress and optionally repositionability of the film during installation. During the smoothing out process, air can escape through the air channels to prevent bubbles from forming or to aid in air egress from bubbles that might have formed during the installation. The films of the present invention thus comprise a patterned PSA. Because of the air channels provided in the patterned PSA, dry installation is possible while removing any air bubbles that may form during installation. These air channels are typically formed by coating the PSA to a patterned or textured release material.

In contrast with PVC automotive restyling films that are opacified with pigments and other additives, TPU protective films are typically optically clear and as a result, do not use PSA systems that have air channels and/or intentionally textured surfaces to achieve air egress; such texture and air channels would be visible from the top of the film and are not aesthetically desirable. Instead, TPU protective films use a smooth and uniform PSA to achieve air egress, and to prevent trapped air bubbles underneath the film; a water-based slip solution or gel is applied to the PSA and the vehicle; and a squeegee is used to remove air and water during installation. Because of the use of slip solutions, initial tack is somewhat limited, and high strains are usually avoided when installing film over complicated surfaces. Further, TPU protective films are commonly pre-cut using a plotter in a shape that resembles the body panels of the vehicle, and relief cuts are made in the patterned TPU protective film to prevent bunching of the film and avoid the need for high strains during installations. While these relief cuts are acceptable for clear films because they are not very noticeable, they are undesirable for an opaque or otherwise decorative ARW because the underlying surface can be noticeably exposed near the relief cuts after installation (e.g. white paint covered by black film would have areas of white paint revealed near the relief cuts).

The present invention provides for a desired combination of film characteristics made from polymer blends useful as ARW films, among other end use applications. In one aspect, the present invention has improved load attenuation under rock impact conditions simultaneous with improved stretchability during installation compared to PVC ARW films. In another aspect, the present invention has improved elastic recovery and deformation set behavior compared to TPU protective films, as shown by the Elastic Recovery and 50% Relaxation test results. In a further aspect, the present invention shows an improvement in post-heating residual stress over both PVC films and TPU protective films as demonstrated by the 25% Heat Stress Relaxation test results. Finally, in one aspect, the compositions of the present invention may be halogen-free.

The films of the invention, which may contain various modifiers such as pigments, flakes, and other particles, are useful as automotive restyling films. To apply the films, the PSA is exposed by removing a silicone-coated release liner and certain locations of the film are "tacked" to the vehicle and an installer uses their hand, a gloved hand, a squeegee, or other tools to smooth out the film so that it conforms to the car body, and wraps around the edge of the panel to hide the underlying color.

The application may be assisted by heating the film, and advantageously a post-application heating treatment is applied to set the film in place, reduce tension, and prevent post-application separation.

Typically, an installer adheres one area of the film near the middle of the car surface, grabs another section of the film with his hand, and then presses (squeegees) the film onto the remaining car surface, stretching the film as it passes over contours in the surface to help remove underlying air. Alternatively, automated processes may be used to obtain the same result. The film may be further stretched during the application of the film so that bunching and creasing is minimized or eliminated or so that the film covers more surface area than it would in its unstretched state. While the stretching occurs, it is important that the stretching be as uniform as possible, especially at the edges of the panel where separation may occur, and where curves may inherently cause uneven tension in the film. Considering that these films are typically stretched manually, there is an upper limit to the force that can be tolerated by an installer to stretch the film. The force required to stretch a film can readily be measured using a standard tensile test. In such a test, a film is stretched at a constant rate of deformation, and the load is recorded as a function of deformation. This deformation can be readily converted into a strain value. The higher the load (normalized to load per inch of width) at a certain given value of strain, the more difficult it is to stretch. Stretchability is a function of both the composition and thickness of the film.

It is also important for the films of the invention to not snap back and recover its original length too quickly after being stretched. This allows the installer to more-easily work (position) the film around complicated corners and shapes

before he presses the film to adhere it to the surface. The property that governs the workability of a film is its elastic recovery, which may be measured as residual strain. Elastic recovery is defined as the residual strain on a film at a certain time after the load is released. It is preferred that the films of the invention possess at least some residual strain up to a minute after load is released, which may be referred to as initial strain. In this regard, highly elastic materials, such as some TPUs commonly used in PPF films that may have low levels of residual strain at one minute (i.e. fast rates of "snap-back"), are not desirable, even though they are superior to PVC films with regards to stretchability and rock resistance. Regardless, it is desirable for any strain on the film to eventually recover to zero, for example at 24 hours after stretching.

The films of the invention, when tested by D412 tensile tests tensile stress at 5% strain of greater than about 20 psi, or greater than 100 psi, or greater than 200 psi. Alternatively, the tensile stress at 5% strain may be no greater than about 700 psi, or no greater than 500 psi, or no greater than 300 psi. Alternatively, the tensile stress at 5% strain may be from about 20 psi to about 700 psi, or from 20 psi to 500 psi, or from 20 psi to 300 psi, or from 20 psi to 100 psi, or from 100 psi to 700 psi, or from 100 psi to 500 psi, or from 100 psi to 300 psi, or from 200 psi to 700 psi, or from 200 psi to 500 psi, or from 200 psi to 300 psi.

The films of the invention, when tested by both D412 tensile tests and piezoelectric impact tests defined herein, have a ratio of load attenuation to tensile stress per inch of greater than about 70 Ib/lb/in, or greater than 80 Ib/lb/in, or greater than 90 Ib/lb/in or greater than 100 Ib/lb/in. Alternatively, the ratio of load attenuation to tensile stress per inch may be from about 70 Ib/lb/in to about 2500 Ib/lb/in, or from 70 Ib/lb/in to 1500 Ib/lb/in, or from 70 Ib/lb/in to 500 Ib/lb/in, or from 70 lb/lb/in to 400 Ib/lb/in, or from 70 lb/lb/in to 300 Ib/lb/in, or from 80 Ib/lb/in to 1500 Ib/lb/in, or from 80 Ib/lb/in to 500 Ib/lb/in, or from 80 Ib/lb/in to 400 Ib/lb/in, or from 80 Ib/lb/in to 300 Ib/lb/in, or from 90 Ib/lb/in to 1500 Ib/lb/in, or from 90 Ib/lb/in to 500 Ib/lb/in, or from 90 Ib/lb/in to 400 Ib/lb/in, or from 90 Ib/lb/in to 300 Ib/lb/in, or from 100 Ib/lb/in to 1500 Ib/lb/in, or from 100 Ib/lb/in to 500 Ib/lb/in, or from 100 Ib/lb/in to 400 Ib/lb/in, or from 100 Ib/lb/in to 300 Ib/lb/in, or from 100 Ib/lb/in to 500 Ib/lb/in, or from 200 Ib/lb/in to 500 Ib/lb/in, or from 800 Ib/lb/in to 2500 Ib/lb/in, or from 900 Ib/lb/in to 1500 lb/lb/in. .

The films of the invention, when tested by the Elastic Recovery Test defined herein, have elastic recovery at 1-minute values of greater than about 2%, or greater than 3%, or greater than 4%. Alternatively, when tested by the Elastic Recovery test defined herein, the compositions may and have elastic recovery at 1 minute values from about 2% to about 25%, or from 3% to 20%, or from 4% to 15%, or up to 25%, or up to 20%, or up to 15%, or up to 10%.

The films of the invention, when tested by a 25% Heat Relaxation Test at a thickness of about 0.006 inches, may exhibit a final load from about 0.01 to about 0.30 pounds force, or from about 0.025 to about 0.20 pounds force, or from about 0.05 to about 0.175 pounds force, or from about 0.05 to about 0.30 pounds force, or from about 0.10 to about 0.30 pounds force, or from about 0.10 to about 0.25 pounds force, or from about 0.15 to about 0.25 pounds force, or from about 0.01 to about 0.07 pounds force, or from about 0.015 to about 0.06 pounds force, or from about 0.02 to about 0.05 pounds force, or from about 0.01 to about 0.20 pounds force, or from about 0.02 to about 0.15 pounds force, or from about 0.03 to about 0.10 pounds force, or from about 0.01 to about 0.50 pounds force, or from about 0.025 to about 0.25 pounds force, or from about 0.03 to about 0.10 pounds force.

The films of the invention, when tested by a 25% Heat Relaxation Test at a thickness of about 0.006 inches, may exhibit a peak load of from about 0.75 to about 4.0 pounds force, or from about 0.85 to about 3.75 pounds force, or from about 1.0 to about 3.5 pounds force, or from about 1.5 to about 4.0 pounds force, or from about 1.75 to about 3.5, or from about 2.0 to about 3.0 pounds force, or from about 0.10 to about 1.0 pounds force, or from about 0.25 to about 0.85 pounds force, or from about 0.35 to about 0.70 pounds force, or from about 0.75 to about 3.5 pounds force, or from about 1.0 to about 3.0 pounds force, or from about 1.25 to about 2.75 pounds force, or from about 0.50 to about 3.5 pounds force, or from about 1.0 to about 3.0 pounds force, or from about 1.5 to about 2.75 pounds force.

The films of the invention, when tested by a 25% Heat Relaxation Test defined herein at a thickness of about 0.006 inches, may exhibit a total load reduction between peak load and final load of equal to or greater than approximately 90%, or equal to or greater than approximately 92%, or equal to or greater than 94%, or equal to or greater approximately 95%, or equal to or greater than 99%.

In another aspect, the films of the invention, when tested by a 25% Heat Relaxation Test defined herein at a thickness of about 0.006 inches, may exhibit a load at initial relaxation from about 0.2 to about 1.5 pounds force, or from about 0.5 to about 1.25 pounds force, or from 0.75 to 1.0 pounds force, or from 0.75 to 3.0 pounds force, or from 1.0 to 2.5, or from 1.15 to 2.0 pounds force, or from 0.005 to 0.5 pounds force, or from 0.10 to 0.40 pounds force, or from about 0.15 to about 0.3 pounds force, or from about 0.2 to about 1.5 pounds force, or from about 0.35 to about 1.25 pounds force, or from about 0.4 to about 1.0 pounds force, or from about 0.25 to about 2.0 pounds force, or from about 0.50 to about 1.5 pounds, or from about 0.75 to about 1.0 pounds force.

In another aspect, the films of the invention, when tested to the 50% Relaxation Test defined herein, may exhibit a peak load from about 1.5 to about 4.5 pounds force, or from 2.5 to 5.0 pounds force, or from 3.0 to 4.5 pounds force, from 2.5 to 5.0 pounds force, or from about 2.75 to about 4.75 pounds force, or from about 3.0 to about 4.25 pounds force, or from about 0.4 to about 3.0 pounds force, or from about 0.50 to about 2.75 pounds force, or from about 0.6 to about 2.5 pounds force, or from about 1.5 to about 5.0 pounds force, from about 1.75 to about 4.0 pounds force, or from about 2.0 to about 3.5 pounds force, or from about 1.0 to about 4.5 pounds force, or from about 2.0 to about 3.5 pounds force, or from about 3.0 to

about 4.5 pounds force.

In a further aspect, the films of the invention, when tested to the 50% Relaxation Test, may exhibit a deformation set of from about 25% to about 50%, or from about 35% to about 50%, or from about 40% to about 50%,

We have found that certain compositional ranges comprising aliphatic thermoplastic polyurethanes (TPUs), optionally prepared as blends of different TPUs or blends of one or more TPUs with other elastomeric polymers, can be extruded into a film that exhibits better paint protection characteristics than a PVC film but has less elastic rebound than a TPU film thus allowing easier installation. In one aspect, the TPUs comprise polycaprolactone diols. Useful optional elastomeric blending polymers can include but are not limited to aliphatic polycaprolactone thermoplastic polyurethanes, aliphatic polyether thermoplastic polyurethanes, ethylene vinyl acetate (EVA), and poly(cyclohexylene dimethylene cyclohexanedicarboxylate), glycol and acid comonomer (PCCE), polyvinyl chloride, thermoplastic polyamides, thermoplastic polyolefin elastomers, thermoplastic styrene block copolymers, thermoplastic aromatic copolyester ether elastomers, polyvinyl acetals such as polyvinyl butyral, or other thermoplastic polymers. In one aspect, the compositions may comprise aliphatic TPUs comprising polycaprolactone diol blended with a polyvinyl acetal polymer, optionally with up to 5% of an additional plasticizer. When blended with a polyvinyl acetal polymer, the thermoplastic polyurethane polymer (TPU) may be present in the polymer blend in an amount from about 30 to about 99 percent by weight, or from about 65 to about 98 percent by weight, or from about 70 to about 97 percent by weight, or from about 75 to about 95 percent by weight, or as defined elsewhere herein. In one aspect, the polyvinyl acetal polymer is polyvinyl butyral. In another aspect, the compositions comprise aliphatic TPUs comprising polycaprolactone diol blended with PCCE. When blended with PCCE, the thermoplastic polyurethane polymer (TPU) is typically present in the polymer blend in an amount from about 65 to about 98 percent by weight, or from about 70 to about 97 percent by weight, or from about 75 to about 95 percent by weight. In another aspect, the compositions or blends can be visually clear.

The invention relates to compositions and films comprising aliphatic thermoplastic polyurethanes, or TPUs. Those skilled in the art understand that the desirable properties of TPUs as described herein may be obtained by blending thermoplastic polyurethanes of differing properties together, or may be the product of a single reaction. When a polymer is described herein, it is thus understood that the polymer may be the product of a single reaction, or may be a blend of polymers selected so that the blend will have the properties desired.

TPUs can be divided into three chemical classes: polyester-based, polyether-based, and polycaprolactone-based, typically referring to the polyols that are reacted with diisocyanates and chain extenders to form the polyurethane. According to the invention, the term "polyol" includes "polymeric diols". Polyester TPUs are generally compatible with PVC and other polar plastics and provide excellent abrasion resistance, offer a good balance of physical properties and are useful in polymer blends. Polyether-based TPUs offer lower temperature flexibility and good abrasion and tear resistance. They also have good hydrolytic stability. Caprolactone TPUs have the inherent toughness and resistance of polyester-based TPU's and good low temperature performance and hydrolytic stability.

The structure of a TPU consists of both a hard segment and a soft segment. The hard segment consists of the combination of the isocyanate and the chain extender, while the soft segment is the polyester, polyether, or polycaprolactone polyol. The percent soft segment is the ratio of the molar mass of the polyol divided by the total molar mass of the soft segment plus hard segment. In one aspect, the soft segment in this invention may comprise from about 35 to about 60 percent by weight, or from about 40 to 60 percent by weight, or from about 45 to 60 percent by weight, or from about 50 to 60 percent by weight, or from about 40 to about 55 percent by weight, or from about 40 to 50, or from about 45 to about 55 percent by weight of the thermoplastic polyurethane polymer.

TPUs can also be subdivided into aromatic and aliphatic TPUs, in this case referring to the diisocyanates used. Aromatic TPUs based on isocyanates like toluene diisocyanate (TDI) and methylene diphenyl diisocyanate (MDI) are the majority of TPUs and are used when strength, flexibility, and toughness are required. However, they typically do not weather well. Aliphatic TPUs based on isocyanates like (4,4'-Methylene dicyclohexyl diisocyanate (H12 MDI), hexamethylene diisocyanate (HDI) and isophorone diisocyanate (IPDI) are light stable and offer excellent clarity. They are commonly used in automotive interior and exterior applications and may be used to bond safety glass together. We have found that aliphatic polycaprolactone-based TPU's offer a good balance of weatherability, low temperature flexibility, and impact resistance needed for many automotive exterior applications, and are especially useful according to the invention.

In a specific aspect, the thermoplastic polyurethanes useful according to the invention may be aliphatic polycaprolactone-based thermoplastic polyurethanes, comprised of a polycaprolactone-based polyol reacted with an aliphatic diisocyanate and, optionally, a chain extender. In this aspect, the aliphatic diisocyanate may be selected from, for example, (4,4'-Methylene dicyclohexyl diisocyanate (also known as H12 MDI or HMDI), hexamethylene diisocyanate (also known as HDI or 1,6-diisocyanatohexane), and isophorone diisocyanate (also known as 5-isocyanato-1-(isocyanatomethyl)-1,3,3-trimethylcyclohexane or IPDI). In one aspect, aliphatic diisocyanate comprises at least 80 mol% of one or more of 4,4'-Methylene dicyclohexyl diisocyanate, hexamethylene diisocyanate, or isophorone diisocyanate. In one aspect, the chain extender comprises a diol having from two to ten carbon atoms. In one aspect, the chain extender comprises 1,4-butanediol. In one aspect, the polycaprolactone-based polyol is comprised of caprolactone units and may be initiated by a glycol such as ethylene glycol, diethylene glycol, hexanediol, neopentyl glycol or butanediol. In a preferred

aspect, the thermoplastic polyurethane comprises residues of HMDI, 1,4-butanediol, and caprolactone.

The polycaprolactone-based polyol used to form the thermoplastic polyurethanes of the invention may have a molecular weight, for example, from about 400 to about 4000, or from 600 to 2500, or from 800 to 2000, or from about 750 to about 2,000, or from about 900 to about 1,500. In one aspect, the polycaprolactone-based polyol used to form the thermoplastic polyurethanes of the invention is initiated by one or more of neopentyl glycol, 1,4-butanediol, or diethylene glycol. In some aspects, the thermoplastic polyurethanes of the invention may comprise minor amounts of an aromatic diisocyanate such as methylene diphenyl diisocyanate (MDI) or toluene diisocyanate (TDI), in in amount, for example, of no more than 20 mol%, or no more than 15 mol%, or no more than 10 mol%.

In one aspect, the aliphatic polycaprolactone-based thermoplastic polyurethanes useful according to the invention have a Tg from about -30ºC to about 60ºC, or from about -20ºC to about 40ºC. as measured by Differential Scanning Calorimetry or Dynamic Mechanical Thermal Analysis. In another aspect, the aliphatic polycaprolactone-based thermoplastic polyurethanes useful according to the invention have a weight average molecular weight from 50,000 daltons to 400,000 daltons, or from about 60,000 daltons to about 350,000 daltons, or from about 100,000 daltons to about 300,000 daltons as measured by Gel Permeation Chromatography (GPC).

Other properties of the aliphatic polycaprolactone-based thermoplastic polyurethanes include the inherent toughness and resistance of polyester-based TPUs and good low temperature performance, good weatherability and light fastness and hydrolytic stability.

In another specific aspect, the thermoplastic polyurethanes useful according to the invention may be aliphatic polyether-based thermoplastic polyurethanes, comprised of a polyether polyol reacted with an aliphatic diisocyanate and, optionally, a chain extender. In this aspect, the aliphatic diisocyanate may be selected from, for example, (4,4'-Methylene dicyclohexyl diisocyanate (also known as H12 MDI or HMDI), hexamethylene diisocyanate (also known as HDI or 1,6-diisocyanatohexane), and isophorone diisocyanate (also known as 5-isocyanato-1-(isocyanatomethyl)-1,3,3-trimethylcyclohexane or IPDI). In one aspect, aliphatic diisocyanate comprises at least 80 mol% of one or more of 4,4'-Methylene dicyclohexyl diisocyanate, hexamethylene diisocyanate, or isophorone diisocyanate. In one aspect, the chain extender comprises a diol having from two to ten carbon atoms. In one aspect, the chain extender comprises 1,4-butanediol. In one aspect, the ether-based polyol is comprised of polypropylene glycol (PPG) or polytetramethylene ether glycol (PTMEG). In a preferred aspect, the thermoplastic polyurethane comprises residues of HMDI, 1,4-butanediol, and polytetramethylene ether glycol.

The polyether polyol used to form the thermoplastic polyurethanes of the invention may have a molecular weight, for example, from about 200 to about 5,000, from about 400 to about 4,000, or from 500 to about 2,000, or from 700 to about 1,500. In some aspects, the thermoplastic polyurethanes of the invention may comprise minor amounts of an aromatic diisocyanate such as methylene diphenyl diisocyanate (MDI) or toluene diisocyanate (TDI), in in amount, for example, of no more than 20 mol%, or no more than 15 mol%, or no more than 10 mol%.

In one aspect, the aliphatic polyether-based thermoplastic polyurethanes useful according to the invention have a Tg from about -80ºC to about 60ºC, or from about -60ºC to about 40ºC as measured by Differential Scanning Calorimetry or Dynamic Mechanical Thermal Analysis. In another aspect, the aliphatic polyether-based thermoplastic polyurethanes useful according to the invention have a weight average molecular weight from 50,000 daltons to 400,000 daltons, or from about 60,000 daltons to about 350,000 daltons, or from about 100,000 daltons to about 300,000 daltons as measured by Gel Permeation Chromatography (GPC).

Other properties of the aliphatic polyether-based thermoplastic polyurethanes include good low temperature performance, good weatherability and light fastness and hydrolytic stability.

TPUs more generally include those disclosed and claimed in U.S. Pat. No. 10,265,932. They are polymers containing urethane (also known as carbamate) linkages, urea linkages, or combinations thereof (i.e., in the case of poly(urethane-urea)s). Thus, polyurethanes useful according to the invention contain at least urethane linkages and, optionally, urea linkages. In one aspect, polyurethane-based layers of the invention may be based on polyurethanes where the backbone has at least about 80% urethane and/or urea repeat linkages formed during their polymerization, or at least 90%, or at least 95% urethane and/or urea repeat linkages formed during their polymerization.

TPUs useful according to the invention can include polyurethane polymers of the same or different chemistries, that is, polymer blends. Polyurethanes generally comprise the reaction product of at least one isocyanate-reactive component, at least one isocyanate-functional component, and one or more optional components such as emulsifiers and chain extending agents.

Isocyanate-reactive components typically include at least one active hydrogen, such as amines, thiols, and polyols, and especially hydroxyl-functional materials such as polyols that provide urethane linkages when reacted with the isocyanate-functional component. Specific polyols of interest include polyester polyols (e.g., lactone polyols) and alkylene oxide adducts thereof (e.g., ethylene oxide; 1,2-epoxypropane; 1,2-epoxybutane; 2,3-epoxybutane; isobutylene oxide; and epichlorohydrin), polyether polyols (e.g., polyoxyalkylene polyols, such as polypropylene oxide polyols, polyethylene oxide polyols, polypropylene oxide polyethylene oxide copolymer polyols, and polyoxytetramethylene polyols; polyoxycycloalkylene polyols; polythioethers; and alkylene oxide adducts thereof), polyalkylene polyols, polycarbonate polyols,

mixtures thereof, and copolymers thereof. Further polyols of interest are those derived from caprolactone, referred to herein as polycaprolactone-based polyols.

In one aspect, the isocyanate-reactive component is thus reacted with an isocyanate-functional component to form a polyurethane. The isocyanate-functional component may contain one isocyanate-functional material or mixtures thereof. Polyisocyanates, including derivatives thereof (e.g., ureas, biurets, allophanates, dimers and trimers of polyisocyanates, and mixtures thereof), (hereinafter collectively referred to as "polyisocyanates") are preferred isocyanate-functional materials for the isocyanate-functional component. Polyisocyanates have at least two isocyanate-functional groups and provide urethane linkages when reacted with the hydroxy-functional isocyanate-reactive components. In one embodiment, polyisocyanates useful for preparing polyurethanes are one or a combination of any of the aliphatic or optionally aromatic polyisocyanates used to prepare polyurethanes.

The isocyanates are typically diisocyanates, and include aromatic diisocyanates, aromatic-aliphatic diisocyanates, aliphatic diisocyanates, cycloaliphatic diisocyanates, and other compounds terminated by two isocyanate-functional groups (e.g., the diurethane of toluene-2,4-diisocyanate-terminated polypropylene oxide polyol). Diisocyanates useful according to the invention thus include: 2,6-toluene diisocyanate; 2,5-toluene diisocyanate; 2,4-toluene diisocyanate; phenylene diisocyanate; 5-chloro-2,4-toluene diisocyanate; 1-chloromethyl-2,4-diisocyanato benzene; xylylene diisocyanate; tetramethyl-xylylene diisocyanate; 1,4-diisocyanatobutane; 1,6-diisocyanatohexane; 1,12-diisocyanatododecane; 2-methyl-1,5-diisocyanatopentane; methylenedicyclohexylene-4,4'-diisocyanate; 3-isocyanatomethyl-3,5,5'-trimethylcyclohexyl isocyanate (isophorone diisocyanate); 2,2,4-trimethylhexyl diisocyanate; cyclohexylene-1,4-diisocyanate; hexamethylene-1,6-diisocyanate; tetramethylene-1,4-diisocyanate; cyclohexane-1,4-diisocyanate; naphthalene-1,5-diisocyanate; diphenylmethane-4,4'-diisocyanate; hexahydro xylylene diisocyanate; 1,4-benzene diisocyanate; 3,3'-dimethoxy-4,4'-diphenyl diisocyanate; phenylene diisocyanate; isophorone diisocyanate; polymethylene polyphenyl isocyanate; 4,4'-biphenylene diisocyanate; 4-isocyanatocyclohexyl-4'-isocyanatophenyl methane; and p-isocyanatomethyl phenyl isocyanate.

Aliphatic isocyanates useful according to the invention thus include aliphatic groups that may be alkyl groups, alkenyl groups, alkynyl groups, and the like, and may be branched or linear, with linear being advantageous. Examples include 1,12-diisocyanatododecane; 2-methyl-1,5-diiso¬cyana¬topentane; methylene¬dicyclohexylene-4,4'-diisocyanate; 3-isocyanatomethyl-3,5,5'-trimethyl-cyclohexyl isocyanate (isophorone diisocyanate); 2,2,4-trimethylhexyl diisocyanate; cyclohexylene-1,4-diisocyanate; hexamethylene-1,6-diisocyanate; tetramethylene-1,4-diisocyanate; cyclohexane-1,4-diisocyanate; trans 1,4-bis (isocyanatomethyl) cyclohexane (aka 1,4-H6XDI); and isophorone diisocyanate.

One or more chain extenders can also be used in preparing the TPUs of the invention, or the TPU/copolyester ether blends of the invention. For example, such chain extenders can be any or a combination of the aliphatic polyols, aliphatic polyamines, or aromatic polyamines used to prepare polyurethanes. Chain extenders useful according to the invention thus include the following: 1,4-butanediol; propylene glycol; ethylene glycol; 1,6-hexanediol; glycerin; trimethylolpropane; pentaerythritol; 1,4-cyclohexane dimethanol; and phenyl diethanolamine. Also note that diols such as hydroquinone bis(β-hydroxyethyl)ether; tetrachlorohydroquinone-1,4-bis(β-hydroxyethyl)ether; and tetrachlorohydroquinone-1,4-bis(β-hydroxyethyl)sulfide, even though they contain aromatic rings, are considered to be aliphatic polyols for purposes of the invention. Aliphatic diols of 2-10 carbon atoms are preferred. Especially preferred is 1,4-butanediol.

The polymer blends of the invention may optionally comprise, a poly(vinyl acetal) resin, such as polyvinyl butyral. The poly(vinyl acetal) resin can be produced by acetalization of poly(vinyl alcohol) with one or more aldehydes in the presence of a catalyst according to known methods such as, for example, those described in U.S. Patent Nos. 2,282,057 and 2,282,026, as well as Wade, B. 2016, Vinyl Acetal Polymers, Encyclopedia of Polymer Science and Technology. 1-22 (online, copyright 2016 John Wiley & Sons, Inc.).

Poly(vinyl acetal) resins typically have a residual hydroxyl content, an ester content, and an acetal content. As used herein, residual hydroxyl content (calculated as PVOH) refers to the weight percent of moieties having a hydroxyl group remaining on the polymer chains. For example, poly(vinyl acetal) can be manufactured by hydrolyzing poly(vinyl acetate) to PVOH, and then reacting the PVOH with an aldehyde, such as butyraldehyde, propionaldehyde, and the like, and desirably butyraldehyde, to make a polymer having repeating vinyl butyral units. In the process of hydrolyzing the poly(vinyl acetate), typically not all of the acetate side groups are converted to hydroxyl groups. For example, reaction with butyraldehyde typically will not result in the conversion of all hydroxyl groups on the PVOH to acetal groups. Consequently, in any finished polyvinyl butyral, there typically will be residual ester groups such as acetate groups (as vinyl acetate groups) and residual hydroxyl groups (as vinyl hydroxyl groups) as side groups on the polymer chain and acetal (e.g., butyral) groups (as vinyl acetal groups). As used herein, residual hydroxyl content is measured on a weight percent basis per ASTM 1396.

In various embodiments, the poly(vinyl acetal) resin may comprise a polyvinyl butyral resin, which is also interchangeably referenced herein as "PVB." An example of a polyvinyl butyral structure is used to further illustrate how the weight percentages are based from the moiety unit to which is bonded the relevant pendant group:

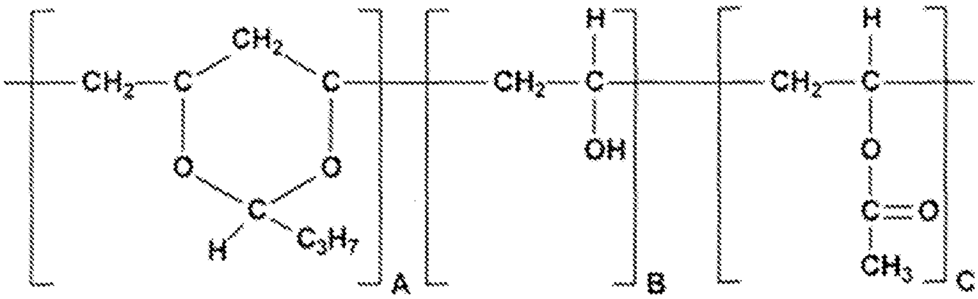

Taking the above structure of polyvinyl butyral, the butyral or acetal content is based on the weight percentage of unit A in the polymer, the OH content is based on the weight percentage of unit B in the polymer (a polyvinyl OH moiety or PVOH), and the acetate or ester content is based on the weight percentage of unit C in the polymer.

The hydroxyl group content of the poly(vinyl acetal) resin is not particularly limited, but suitable amounts may be from at least 6, at least 8, at least 10, at least 11, at least 12, at least 13, at least 14, at least 15, at least 16, or at least 17 and in each case up to 50 weight percent or more of PVOH. In some embodiments, the poly(vinyl acetal) may have less than 15 weight percent, or less than 14, less than 13, less than 12, less than 11, less than 10, less than 9, or less than 8 weight percent residual hydroxyl content. In general, a poly(vinyl acetal) resin having a lower hydroxyl weight percentage has the capability of absorbing more plasticizer and absorbing it more efficiently. Conversely, a poly(vinyl acetal) resin having a higher hydroxyl weight percentage typically has a higher refractive index.

The poly(vinyl acetal) resin can also comprise 20 weight percent or less, 17 weight percent or less, 15 weight percent or less, 13 weight percent or less, 11 weight percent or less, 9 weight percent or less, 7 weight percent or less, 5 weight percent or less, or 4 weight percent or less of residual ester groups calculated as polyvinyl ester, for example acetate, with the balance being an acetal, such as butyraldehyde acetal, but optionally including other acetal groups in a minor amount, for example, a 2 ethyl hexanal group (see U.S. Patent No. 5,137,954). As with the residual hydroxyl group measurement, the weight percent of residual ester groups (that is, residual acetate content) is based on the moiety in the polymer backbone onto which is linked the acetate group, including the pendant acetate group.

The poly(vinyl acetal) resin used in the invention can also have an acetal content of at least 50, at least 55, at least 60, at least 65, at least 70, at least 75, at least 80, at least 85, or at least 90 weight percent or more. Additionally or alternatively, the acetal content can be up to 94, up to 93, up to 92, up to 91, up to 90, up to 89, up to 88, up to 86, up to 85, up to 84, up to 83, up to 82, up to 80, up to 78, up to 77, up to 75, up to 70, or up to 65 weight percent.

The acetal groups in the poly(vinyl acetal) resins can comprise, for example, vinyl propynyl groups or vinyl butyral groups. In one or more embodiments, the acetal groups comprise vinyl butyral groups. In some embodiments, the poly(vinyl acetal) resin can include residues of any aldehyde and, in some embodiments, may include residues of at least one C4 to C8 aldehyde. Examples of suitable C4 to C8 aldehydes can include, for example, n-butyraldehyde, i-butyraldehyde, 2-methylvaleraldehyde, n-hexyl aldehyde, 2-ethylhexyl aldehyde, n-octyl aldehyde, and combinations thereof. One or more of the poly(vinyl acetal) resins utilized in the layers and interlayers described herein can include at least 20, at least 30, at least 40, at least 50, at least 60, or at least 70 weight percent or more of residues of at least one C4 to C8 aldehyde, based on the total weight of aldehyde residues of the resin. Alternatively, or in addition, the poly(vinyl acetal) resin may include not more than 99, not more than 90, not more than 85, not more than 80, not more than 75, not more than 70, or not more than 65 weight percent of at least one C4 to C8 aldehyde. The C4 to C8 aldehyde may be selected from the group listed above, or it can be selected from the group consisting of n-butyraldehyde, i-butyraldehyde, 2-ethylhexyl aldehyde, and combinations thereof.

The weight average molecular weight of the poly(vinyl acetal) resin is not particularly limited. The poly(vinyl acetal) resin can have a weight average molecular weight (Mw) of at least 20,000, at least 30,000, at least 40,000, at least 50,000, at least 60,000, or at least 70,000, with no particular upper limit, although practically up to 300,000 Daltons is suitable, although higher molecular weights maybe be used in some cases. Molecular weight was measured by size exclusion chromatography (SEC) in tetrahydrofuran using low angle laser light scattering (SEC/LALLS) or UV/differential refractometer detectors. Calibrations of the chromatograph are performed using polystyrene standards. As used herein, the term "molecular weight" refers to weight average molecular weight (Mw).

In a significant aspect, then, the polymer blends of the invention further comprise a polyvinyl acetal, and especially polyvinyl butyral (PVB). PVBs are clear, colorless, amorphous thermoplastics obtained by condensation reactions of polyvinyl alcohol and butyraldehyde. The resins are known for its excellent flexibility, film-forming and good adhesion properties as well as outstanding UV resistance. The properties of PVB like its solubility in solvents and compatibility with binders and plasticizers depend on the degree of acetalization and polymerization. An increase of the number of butyral groups in the polymer usually improves the water resistance of PVB films. PVB can also be cross-linked. Its cross-linking capacity depends on the number of residual OH groups in the polymer which can undergo condensation

reactions with phenolic, epoxy, and melamine resins as well as with isocyanates. These chemical modifications produce high quality solvent resistant PVB coatings and films. One of the major uses of PVB films is safety glass. Due to PVB's good adhesion to glass, most of the splinters of fractured glass will adhere to the surface of the PVB film and thus prevent personal injury by large and sharp glass fragments. PVB laminated glass also offers an improved sound barrier, good impact resistance, and almost 100% absorption of UV light. The latter is important for the protection of interiors from fading due to UV exposure.

The PVB resin is produced by known acetalization processes by reacting polyvinyl alcohol ("PVOH") with butyraldehyde in the presence of an acid catalyst, separation, stabilization, and drying of the resin, as already described. The resin is commercially available in various forms, for example, as Butvar® Resin from Solutia Inc., a wholly owned subsidiary of Eastman Chemical Company.

As used herein, residual hydroxyl content (calculated as %vinyl alcohol or %PVOH by weight) in PVB refers to the amount of hydroxyl groups remaining on the polymer chains after processing is complete. For example, PVB can be manufactured by hydrolyzing poly(vinyl acetate) to poly(vinyl alcohol (PVOH), and then reacting the PVOH with butyraldehyde. In the process of hydrolyzing the poly(vinyl acetate), typically not all of the acetate side groups are converted to hydroxyl groups. Further, reaction with butyraldehyde typically will not result in all hydroxyl groups being converted to acetal groups. Consequently, in any finished PVB resin, there typically will be residual acetate groups (as vinyl acetate groups) and residual hydroxyl groups (as vinyl hydroxyl groups) as side groups on the polymer chain. As used herein, residual hydroxyl content and residual acetate content is measured on a weight percent (wt.%) basis per ASTM D1396.

The PVB resins of the present disclosure typically have a molecular weight of greater than 40,000 Daltons, or less than 500,000 Daltons, or about 40,000 to about 500,000 Daltons, or about 70,000 to about 500,000 Daltons, or about 70,000 to about 425,000 Daltons, or from about 25,000 to about 300,000, or from about 30,000 to about 300,000, or from about 50,000 to about 300,000, or from about 50,000 to about 280,000, or from about 35,000 to about 275,000, or from about 35,000 to about 250,000, or from about 40,000 to about 250,000, or from about 40,000 to about 230,000 as measured by size exclusion chromatography using low angle laser light scattering. As used herein, the term "molecular weight" means the weight average molecular weight.

In another aspect, the poly(vinyl butyral) may have a %PVOH value, as further described herein, from about 8.5 % to about 35%, or from about 8 to about 26, or from about 9 to about 25, or from about 10 to about 24, or from about 15 to about 25, or from about 17 to about 22, or from about 18 to about 21. Alternatively, the %PVOH value of the stiff poly(vinyl butyral) may be from about 15% to about 30%, or from 18% to 20%, or as further described herein.

In another aspect, the poly(vinyl butyral) may have a residual acetate content, as further described herein, from about 0% to about 18%. Alternatively, the residual acetate content of the stiff poly(vinyl butyral) may be less than 10%, or less than 5%, or less than 2%, or less than 1%, or as further described herein.

The polymer blends of the invention may optionally comprise EVA. Ethylene-vinyl acetate (EVA), also known as poly (ethylene-vinyl acetate) (PEVA), is the copolymer of ethylene and vinyl acetate. The weight percent of vinyl acetate usually varies from 10 to 40%, with the remainder being ethylene. The EVA copolymer which is based on a low proportion of VA (approximately up to 4%) may be referred to as vinyl acetate modified polyethylene. It is a copolymer and is processed as a thermoplastic material. It has some of the properties of a low-density polyethylene but increased gloss (useful for film), softness and flexibility. The material is generally considered non-toxic. The EVA copolymer which is based on a medium proportion of VA (approximately 4 to 30%) is referred to as thermoplastic ethylene-vinyl acetate copolymer and is a thermoplastic elastomer material. It is not vulcanized but has some of the properties of a rubber or of plasticized polyvinyl chloride particularly at the higher end of the range. Both filled and unfilled EVA materials have good low temperature properties and are tough. The materials with approximately 11% VA are used as hot melt adhesives. The EVA copolymer which is based on a high proportion of VA (greater than 60%) is referred to as ethylene-vinyl acetate rubber. EVA is an elastomeric polymer that produces materials which are "rubber-like" in softness and flexibility. The material has good clarity and gloss, low-temperature toughness, stress-crack resistance, hot-melt adhesive waterproof properties, and resistance to UV radiation. EVA has a distinctive vinegar-like odor and is competitive with rubber and vinyl polymer products in many electrical applications.

The polymer blends of the invention may optionally comprise a polymeric plasticizer. Polymeric plasticizers useful for this invention are polymers that are formed by the polymerization of glycols with one or more of adipic acid, phthalic acid, and sebacic acid, triethyl citrate, acetyl triethyl citrate, tri-n-butyl citrate, acetyl tri-n-butyl citrate, benzoate esters obtained by the reaction of benzoic acid and linear/branched alkyl residues in the range of C7 - C12, dibenzoate esters of C2 - C8 linear/branched glycols/diols. In a specific embodiment, the polymeric plasticizer is a polymeric adipate plasticizer. Useful plasticizers are offered by Eastman Chemical Company under the ADMEX tradename. In one embodiment, the plasticizer is present in the polymer blend in an amount from about 1% to about 5%.

As used herein, the term "molecular weight" refers to weight average molecular weight (Mw). The plasticizers in this disclosure typically have a molecular weight range of 500 to 70,000 Daltons or alternatively from 750 to 10,000 Daltons or from 1,000 to 7,500 Daltons as measured by Gel Permeation Chromatography. Molecular weight was measured by gel

permeation chromatography according to ASTM Method D5296-11 using an Agilent series 1200 Liquid chromatography system including degasser, isocratic pump, auto-sampler, column oven, and a refractive index detector. The analysis was performed using an Agilent 5 μm PLgel, Guard + Mixed C + Oligopore column with an injection volume of 25 microliters at a flow rate of 1.0 ml/min at 30°C. The sample solution consisted of 25 mg of sample in 10 ml Tetrahydrofuran + 10 μl toluene flow rate marker. Monodisperse polystyrene standards were used to determine Polystyrene equivalent molecular weights.

The polymer blends of the invention also comprise a thermoplastic copolyester ether elastomer. Thermoplastic copolyester ether elastomers have high flexibility without plasticizers, very high clarity, excellent toughness and puncture resistance, outstanding low temperature strength and excellent flex crack & creep resistance. In one embodiment, the thermoplastic copolyester ether elastomer is poly(cyclohexylene dimethylene cyclohexanedicarboxylate) (PCCE), manufactured by the reaction of dimethylcyclohexane dicarboxylate with cyclohexane dimethanol and polytetramethylene glycol.

The invention thus relates to the use of blends that also comprise thermoplastic copolyester ethers that are elastomers, and especially elastomers that are high molecular weight semi-crystalline thermoplastic copolyester ethers manufactured by the reaction of dimethylcyclohexane dicarboxylate with cyclohexane dimethanol and polytetramethylene glycol. The copolyester ethers useful according to the invention have high flexibility without plasticizers, very high clarity, excellent toughness and puncture resistance, outstanding low temperature strength, and excellent flex, crack, and creep resistance.

Copolyester ethers useful according to the invention include those disclosed in U.S. Pat. Nos. 4,349,469 and 4,939,009. The copolyester ethers useful according to the invention are tough, flexible materials that can be extruded into clear sheets. They include copolyester ethers based on 1,4-cyclohexanedicarboxylic acid or an ester thereof, 1,4-cyclohexanedimethanol, and poly(oxytetramethylene) glycol, also known as polytetramethylene ether glycol. The copolyester ethers useful according to the invention include those available commercially from Eastman Chemical Company, Kingsport, TN, under the ECDEL brand.

In one aspect, the copolyester ethers may have an Inherent Viscosity (Ih.V.), for example, from about 0.8 to 1.5, and recurring units from (1) a dicarboxylic acid component comprising 1,4-cyclohexanedicarboxylic acid or an ester thereof typically having a trans isomer content of at least 70%, or at least 80%, or at least 85%; (2) a glycol component comprising, for example, (a) about 95 to about 65 mol % 1,4-cyclohexanedimethanol, and (b) about 5 to about 50 mol % poly(oxytetramethylene) glycol, or 10 to 40 mol%, or 15 to 35 mol%, having a molecular weight for example, from about 500 to about 1200, or from 900 to 1,100, in both cases being weight average molecular weight.

Alternatively, the copolyester ethers may have an inherent viscosity (IhV), for example, from about 0.85 to about 1.4, or from 0.9 to 1.3, or from 0.95 to 1.2. As used herein, the IhV is determined by dissolving a sample of the polymer in a solvent, measuring the flow rate of the solution through a capillary and then calculating the IhV based on flow. Specifically, ASTM D4603-18, Standard Test Method for Determining Inherent Viscosity of Poly(Ethylene Terephthalate) (PET) by Glass Capillary Viscometer, may be used to determine IhV. In a further aspect, the Tg of the polyester ethers may have an glass transition temperature (Tg) from about -70C to about 50C, or from about -50C to 0C as measured according to ASTM D3418-15 and further discussed below.

In addition to 1,4-cyclohexanedimethanol, other typical aliphatic or cycloaliphatic diols having 2 to 10 carbon atoms that are useful in forming the copolyester ethers include those such as ethylene glycol, diethylene glycol, triethylene glycol, tetraethylene glycol, pentaethylene glycol, 1,2-propylene glycol, 1.4-propylene glycol, dipropylene glycol, 1,2-butanediol, 1,3-butanediol, 1,4-butanediol, 1,5-pentanediol, 1,6-hexanediol, 1,2- cyclohexanedimethanol, 1,3-cyclohexanedimethanol, 2,2-dimethyl-1,3-propanediol (neopentyl glycol), 2-ethyl-2-isobutyl-1,3-propanediol, 2-methyl-1,3-propanediol, 2-butyl-2-ethyl-1,3-propanediol, 2,2,4-trimethyl-1,3-pentanediol, 2,2,4,4-tetramethyl-1,3-cyclobutanediol, 2,2,4,4-tetramethyl-1,6-hexanediol, 1,10-decanediol, 1,4-benzenedimethanol, hydroxypivalyl hydroxypivalate, and combinations thereof and the like. Although minor amounts of aromatic diols may be used, this may not be preferred.

In addition to 1,4-cyclohexanedicarboxylic acid, other aliphatic, cycloaliphatic or aromatic diacids or dianhydrides having 2 to 10 carbon atoms that are useful in forming the copolyester ethers include those such as adipic acid, maleic anhydride, maleic acid, fumaric acid, itaconic anhydride, itaconic acid, citraconic anhydride, citraconic acid, dodecanedioic acid, succinic acid, succinic anhydride, glutaric acid, sebacic acid, azelaic acid, terephthalic acid, isophthalic acid, stilbene dicarboxylic acid, bibenzoic acid hexahydrophthalic anhydride (HHPA), tetrahydrophthalic anhydride, tetrachlorophthalic anhydride, 5-norbornene-2,3-dicarboxylic anhydride, 5-norbornene-2,3-dicarboxylic acid, 2,3-norbornanedicarboxylic acid, 2,3-norbornanedicarboxylic acid anhydride, dimethylcyclohexane dicaboxylate (DMCD) and combinations thereof and the like. Aliphatic acids or anhydrides are preferred

In addition to polytetramethylene ether glycol, other useful polyether polyols having 2-4 carbon atoms between ether units include polyethylene ether glycol, and polypropylene ether glycol, and combinations thereof. According to the invention, the term "polyol" includes "polymeric diols". Useful commercially available polyether polyols include Carbowax resins, Pluronics resins, and Niax resins. Polyether polyols useful according to the invention include those that may be characterized generally as polylakylene oxides, and may have a molecular weight, for example, from about 300 to about 10,000 or 500 to 2000.

The copolyester ethers further may comprise, for example, up to about 1.5 mol %, based on the acid or glycol component, of a polybasic acid or polyhydric alcohol branching agent having at least three -COOH or -OH functional groups and from 3 to 60 carbon atoms. Esters of many such acids or polyols may also be used. Suitable branching agents include 1,1,1-trimethylol propane, 1,1,1-trimethylolethane, glycerin, pentaerythritol, erythritol, threitol, dipentaerythritol, sorbitol, phenyl dianhydride, trimellitic acid or anhydride, trimesic acid, and trimer acid.

It should be understood that the total acid reactants should be 100%, and the total glycol reactants should be 100 mol %. Although the acid reactant is said to comprise 1,4-cyclohexanedicarboxylic acid, if the branching agent is a polybasic acid or anhydride, it will be calculated as part of the 100 mol % acid. Likewise, the glycol reactant is said to comprise 1,4-cyclohexanedimethanol and poly(oxytetramethylene) glycol; if the branching agent is a polyol, it will be calculated as part of the 100 mol % glycol.

The trans and cis isomer contents of the final copolyester ethers may be controlled in order to give polymers that setup or crystallize rapidly. Cis- and trans- isomer contents are measured by conventional methods known to those skilled in the art. See, for example, U.S. Pat. No. 4,349,469.

Especially suitable copolyester ethers useful according to the invention are copolyester ethers based on 1,4-cyclohexanedicarboxylic acid, 1,4-cyclohexanedimethanol, and polytetramethylene ether glycol or other polyalkylene oxide glycol. In one aspect, the 1,4-cyclohexanedicarboxylic acid is present in an amount of at least 50 mol%, or at least 60 mol%, or at least 70 mol%, or at least 75 mol%, or at least 80 mol%, or at least 85 mol%, or at least 90 mol%, or at least 95 mol%, in each case based on the total amount of dicarboxylic acids present in the copolyester ether. In another aspect, the 1,4-cyclohexanedimethanol is present in an amount of from about 60 mol% to about 98 mol%, or from 65 mol% to 95 mol%, or from 70 mol% to 90 mol%, or from 75 mol% to 85 mol%, in each case based on the total amount of glycol. In another aspect, the polytetramethylene ether glycol is present in the copolyester ethers in an amount from about 2 to about 40 mol %, or from 5 mol% to 50 mol%, or from 7 mol% to 48 mol%, or from 10 mol% to 45 mol%, or from 15 to 40 mol%, or from 20 mol% to 35 mol%, in each case based on the total amount of glycol present.

In a further aspect, the amount of 1,4-cyclohexanedicarboxylic acid is from about 100 mol% to about 98 mol%, the amount of 1,4-cyclohexanedimethanol is from about 80 mol% to about 95 mol%, and the amount of polytetramethylene ether glycol is from about 5 mol% to about 20 mol%, and trimellitic anhydride may be present in an amount from 0.1 to 0.5 mol% TMA .

In a more specific aspect, the amount of 1,4-cyclohexanedicarboxylic acid is from 98 mol% to 100 mol%, the amount of 1,4-cyclohexanedimethanol is from 70 mol% to 95 mol%, and the amount of polytetramethylene ether glycol is from 5 mol% to 30 mol%, and trimellitic anhydride may be present in an amount from 0 to 0.5 mol%.

In yet another specific aspect, the amount of 1,4-cyclohexanedicarboxylic acid is from 99 mol% to 100 mol%, the amount of 1,4-cyclohexanedimethanol is from 70 mol% to 95 mol%, and the amount of polytetramethylene ether glycol is from 5 mol% to 30 mol%, and trimellitic ahydride may be present in an amount from 0 mol% to 1 mol%.

The copolyester ethers of the invention may include a phenolic antioxidant that is capable of reacting with the polymer intermediates. This causes the antioxidant to become chemically attached to the copolyester ether and be essentially nonextractable from the polymer. Antioxidants useful in this invention may contain one or more of an acid, hydroxyl, or ester group capable of reacting with the reagents used to prepare the copolyester ether. It is preferred that the phenolic antioxidant be hindered and relatively non-volatile. Examples of suitable antioxidants include hydroquinone, arylamine antioxidants such as 4,4'-bis(.alpha.,.alpha.-dimethylbenzyl)diphenylamine, hindered phenol antioxidants such as 2,6-di-tert-butyl-4-methylphenol, butylated p-phenyl-phenol and 2-(.alpha.-methylcyclohexyl)-4,6-dimethylphenol; bis-phenols such as 2,2'-methylenebis-(6-tert-butyl-4-methylphenol), 4,4'bis(2,6-di-tert-butylphenol), 4,4'-methylenebis(6-tert-butyl-2-methylphenol), 4,4'-butylene-bis(6-tert-butyl-3-methylphenol), methylenebis-(2,6di-tertbutylphenol), 4,4'-thiobis(6-tert-butyl-2-methylphenol), and 2,2'-thiobis(4-methyl-6-tert-butylphenol); tris-phenols such as 1,3,5-tris(3,5-di-tert-butyl-4-hydroxyhydrocinnamoyl)-hexahydro-s-triazine , 1,3,5-trimethyl-2,4,6-tris(3,5-di-tert-butyl-4-hydroxybenzyl)benzene and tri(3,5-di-tert-butyl-4-hydroxyphenyl)phosphite; and tetrakis[methylene(3,5-di-tert-butyl-4-hydroxyhydrocinnamate)methane] which is commercially available from Geigy Chemical Company as Irganox 1010 antioxidant, is preferred. Preferably, the antioxidant is used in an amount of from about 0.1 to about 1.0, based on the weight of copolyester ether.

Copolyester ethers of this invention include those characterized by their good melt strength. A polymer having melt strength is described as one capable of supporting itself on being extruded downward from a die in the melt. When a polymer with melt strength is extruded downward, the melt will hold together. When a polymer without melt strength is extruded downward, the melt rapidly drops and breaks. For purposes of comparison, the melt strength is measured at a temperature 20ºC. above the melting peak.

Many useful applications can be envisioned for the blends from which these films are formed, such as paint protective films, automotive restyling films, graphic films, medical fabrics, breathable textiles, smart clothing, surface protective films, touch screen films, automotive interior surfacing films, laminating glass inner layers, tubing and hosing, belts and profiles, seals and gaskets. This list is by no means exhaustive. Thus, the polymer blend can be melt compounded in number of ways for ultimate formation into an article. In one embodiment, the film has a thickness from

about 50 to about 300 microns, or from about 100 to about 300, or from about 125 microns to about 200 microns. In one embodiment, the films may further comprise an adhesive layer. In another embodiment, the film may further comprise a protective topcoat for example an acrylic, polyester, polyurethane, or blends thereof, on the side of the film opposite the adhesive layer. Such topcoats may comprise such additives as fluoropolymers, silicon compounds, nanoparticles, or the like. While a protective topcoat may be advantageous, the presence of a topcoat should not unduly affect the desired properties of the compositions and films of the invention.

In one aspect, the polymer blend may be formed in a plastics compounding line such as a twin-screw compounding line. In this aspect, pellets are dried for 4 to 6 hours at approximately 125° F to drive off any moisture. The pellets can then be fed into the throat of the extruder and melted from 170° to 200° F to produce a viscous thermoplastic material. The polymer blend can be pre-blended and added as a single blend with a loss-in-weight feeder or can be added separately with loss-in-weight feeders. The rotation of the two screws disperses and melts the polymer blend. The mixture is then extruded through a die to produce multiple strands. The strands can be fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

In another aspect, the polymer blend can be formed in a plastics compounding line such as a two-rotor continuous compounding mixer (such as a Farrell Continuous Mixer). In this case, pellets can be dried for 4 to 6 hours at approximately 125° F to drive off any moisture. The pellets are fed into the throat of the continuous mixer and melted into a homogenous mixture at 170° to 200° F. The output rate of the mixer is controlled by varying the area of a discharge orifice. The melt can be sliced off into 'loaves' and fed to a two-roll mill or the throat of a single screw extruder. In the case of the melt being fed to a two-roll mill, the melt covers one of the rolls and strip can be fed to the throat of a single screw extruder. The mixture is then extruded through a die to produce multiple strands. The strands can be fed through a water trough to cool the pellets. Upon exiting the water trough, the strands are dried and fed into a dicer to cut the strands into pellets.

Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water. In the case of the 'loaves' being fed to a single-screw extruder, the mixture is extruded through a die to produce multiple strands. The strands can be fed through a water trough to cool the pellets. Upon exiting the water trough, the strands are dried and fed into a dicer to cut the strands into pellets.

Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

In a further aspect, the polymer blend may be formed in a high-intensity mixer such a Banbury batch type mixer. In this case, the pellets can be dried for 4 to 6 hours at approximately 125° F to drive off any moisture. The pellets are charged into the high-intensity mixer and a ram lowered to compress the pellets into the mixing chamber. Two rotating mixer blades melt the pellets. When the desired temperature of between 170° to 200° F is reached, a door is opened in the bottom of the mixer and the mixture is dropped two a two-roll mill. A ribbon from the two-roll mill can then be fed to a single screw extruder. The mixture is then extruded through a die to produce multiple strands. The strands can be fed through a water trough to cool the pellets. Upon exiting the water trough, the strands are dried and fed into a dicer to cut the strands into pellets.

Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

In various aspects, the present invention may envision several different methods to make a plastic article: extrusion to produce a continuous flat sheet, profile, or fiber, or injection molding to create discrete articles.

In one aspect, the invention relates to extruding 'fully-compounded' pellets at the desired polymer blend concentration ratio or the polymer to produce a film, flat sheet, profile or fiber. In this case, the pellets are dried at approximately 125° F for 4 to 6 hours to drive off any moisture and are then fed to either a single screw extruder, a twin-screw extruder, or a conical twin screw extruder. The pellets are conveyed and compressed by the screw(s) down the extruder barrel to melt the pellets and discharge the melt from the end of the extruder. The melt can be fed through a screening device to remove debris and/or a melt pump to reduce pressure variations caused by the extruder. The melt can then be fed through a die to create a continuous film or flat sheet or an into a profile die to create a continuous shape.

In the case of a flat sheet die, the melt can be extruded onto a series of metal rolls, typically three, to cool the melt and impart a finish onto the sheet or alternatively for a film, the melt can be "cast" onto metal rolls or onto a continuous carrier film to act as a release liner. The film or flat sheet is then conveyed in a continuous sheet to cool onto a series of cooling rolls. It can then be trimmed to the desired width and then either rolled up into a roll or sheared or sawed into sheet

form. A flat sheet can also be formed into a shape through mechanical means to form a desired shape and then cooled either by spraying with water, through a water trough, or by blowing air on the profile. It can then be sawed or sheared to the desired length. In the case of a profile die, the die is designed to produce the desired shape of the article. After exiting the die, it can then be cooled either by spraying with water, through a water trough, or by blowing air on the profile. It can then be sawed or sheared to the desired length. In the case of a fiber, the fiber can be pulled out of the extrusion die spinnerets to the desired fiber diameter.

In another aspect, the invention relates to extruding neat pellets at the desired polymer blend concentration of the polymer. The pellets are dried at approximately 125° F for 4 to 6 hours before extrusions. The pellets can be dried separately or together after being blended in a low-intensity mixer such as a ribbon blender, a tumbler, or conical screw blender. The pellets are then fed to either a single-screw extruder, a twin-screw extruder, or a conical twin-screw extruder. The pellets are conveyed and compressed by the screw(s) down the extruder barrel to melt the pellets and discharge the melt from the end of the extruder. The melt can be fed through a screening device to remove debris and/or a melt pump to reduce pressure variations caused by the extruder. The melt can then be fed through a die to create a continuous film or flat sheet or an into a profile die to create a continuous shape.

In the case of the flat sheet die, the melt can be extruded onto a series of metal rolls, typically three, to cool the melt and impart a finish onto the sheet or alternatively for a film, the melt can be "cast" onto metal rolls or onto a continuous carrier film to act as a release liner. The film or flat sheet is then conveyed in a continuous sheet to cool onto a series of cooling rolls. It can then be trimmed to the desired width and then either rolled up into a roll or sheared or sawed into sheet form. A flat sheet can also be formed into a shape through mechanical means to form a desired shape and then cooled either by spraying with water, through a water trough, or by blowing air on the profile. It can then be sawed or sheared to the desired length. In the case of a profile die, the die is designed to produce the desired shape of the article. After exiting the die, it can then be cooled either by spraying with water, through a water trough, or by blowing air on the profile. It can then be sawed or sheared to the desired length. In the case of a fiber, the fiber can be pulled out of the extrusion die spinnerets to the desired fiber diameter.

In another aspect, the invention relates to extruding ’fully-compounded’ pellets. or at the desired polymer blend ratio, or the polymer, to produce an injection-molded article. In this case, the pellets are dried at 150° to 160° F for 4 to 6 hours to drive off any moisture and are then fed to a reciprocating single screw extruder. The pellets are melted by the screw rotation and reciprocating action. Once the pellets reach the desired temperature, a gate is opened at the end of the extruder and the melted plastic is pumped by the screw into a heated mold to form an article of the desired shape. Once the mold is filled, a coolant is pumped through the mold to cool it and the melted plastic. Once the plastic has solidified, the mold is opened and the article is removed from the mold. Typical extruder processing conditions are set out below:

**Table 1. Typical extrusion conditions**

| | |
|---|---|
| Torque (%) | 70 |
| Line Speed (fpm) | 22 |
| Melt Temp (F) | 380 |
| Head Pressure (psi) | 2563 |
| Chill Roll Temp (psi) | 60 |
| Nip Roll Temp F | 124 |
| Urethane Sheet width | 62 |
| | |
| **Temperature Zones (F)** | |
| Barrel Zone set point-1 | 297 |
| Barrel Zone set point-2 | 317 |
| Barrel Zone set point-3 | 330 |
| Barrel Zone set point-4 | 340 |
| Barrel Zone set point-5 | 340 |
| Barrel Zone set point-6 | 340 |
| Die Set point-1 | 350 |
| Die Set point -2 | 350 |

(continued)

| Temperature Zones (F) | |
|---|---|
| Die Set point -3 | 350 |
| Die Set point -4 | 375 |
| Die Set point -5 | 375 |
| Die Set point -6 | 375 |
| Die Set point -7 | 375 |
| Die Set point -8 | 375 |
| Die Set point -9 | 375 |
| Die Set point -10 | 375 |
| Die Zone Actual Temp-1 | 383 |
| Die Zone Actual Temp -2 | 385 |
| Die Zone Actual Temp -3 | 385 |
| Die Zone Actual Temp -4 | 385 |
| Die Zone Actual Temp -5 | 385 |
| Die Zone Actual Temp -6 | 385 |
| Die Zone Actual Temp -7 | 383 |

Unless otherwise indicated, all numbers expressing quantities of ingredients, properties such as molecular weight, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, each numerical parameter should at least be construed in light of the number of reported significant digits and by applying ordinary rounding techniques. Further, the ranges stated in this disclosure and the claims are intended to include the entire range specifically and not just the endpoint(s). For example, a range stated to be 0 to 10 is intended to disclose all whole numbers between 0 and 10 such as, for example 1, 2, 3, 4, etc., all fractional numbers between 0 and 10, for example 1.5, 2.3, 4.57, 6.1113, etc., and the endpoints 0 and 10.

Notwithstanding that the numerical ranges and parameters setting forth the broad scope of the invention are approximations, the numerical values set forth in the specific examples are intended to be reported precisely in view of methods of measurement. Any numerical value, however, inherently contains certain errors necessarily resulting from the standard deviation found in their respective testing measurements.

It is to be understood that the mention of one or more process steps does not preclude the presence of additional process steps before or after the combined recited steps or intervening process steps between those steps expressly identified. Moreover, the denomination of process steps, ingredients, or other aspects of the information disclosed or claimed in the application with letters, numbers, or the like is a convenient means for identifying discrete activities or ingredients and the recited lettering can be arranged in any sequence, unless otherwise indicated.

As used herein, the singular forms "a", "an", and "the" include plural referents unless the context clearly dictates otherwise. For example, reference to a $C_n$ alcohol equivalent is intended to include multiple types of $C_n$ alcohol equivalents. Thus, even use of language such as "at least one" or "at least some" in one location is not intended to imply that other uses of "a", "an", and "the" excludes plural referents unless the context clearly dictates otherwise. Similarly, use of the language such as "at least some" in one location is not intended to imply that the absence of such language in other places implies that "all" is intended, unless the context clearly dictates otherwise.

As used herein the term "and/or", when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination.

This invention can be further illustrated by the following examples of embodiments thereof, although it will be understood that these examples are included merely for purposes of illustration and are not intended to limit the scope of the invention unless otherwise specifically indicated.

## EXAMPLES

All samples were prepared by bag blending pellets of the various materials, extruding the pellet blends in an X-Plore mini-extruder and then pressing the extruded strands into films on a Carver Press. The films were tested for Tensile Properties, Stress Relaxation at 50% Strain, Stress Relaxation at 25% strain with heat applied to the films, Stress Recovery at 25% Strain, and Impact Force Attenuation. Samples were also evaluated visually for clarity.

### Preparation of samples:

Polymer strand samples were prepared using an X-plore twin screw mini-extruder. Cooling water and ventilation were both used. The mid-zone temperature was set at 180 °C, the extruder speed was 150 RPM, max force set at 10000 N and acceleration set at 800 RPM/min. The raw materials were weighed to a batch size of up to 8 grams and well mixed in closed extruder for 1 min. Strands (diameter ~5mm) were extruded out and collected on a flat glass slab and allowed to cool to room temperature.

The polymer strands were then pressed on a Carver Press. The heating platens were set at 180 °C. The polymer was placed between two thick metal plates, along with silicone films between the polymer and metal plates. The plates were then placed between the platens and preheated for 1 minute. The pressure was adjusted to minimum and the platens raised together and heated for 1 minute. The load was increased when a metal shim was used. If using a metal shim to control thickness, the load was increased to 40,000 pounds. If not using a shim, then the load was increased to between 10,000 to 35,000 pounds. This yields a 0.006" to 0.010" thick film depending on the rheological properties of the polymer. Cooling water was then turned on to cool the heating platens down to 100 °C then the water was turned off. The platens were opened, the sample removed and finished cooling to room temperature.

### Testing:

### Tensile properties

Films were tested for tensile properties according to ASTM D412-16 (Reapproved 2021) (Standard Test Methods for Vulcanized Rubber and Thermoplastic Elastomers-Tension) using test method A. Film samples were cut using ASTM Die B into dogbone specimens prior to measurement. All samples were conditioned at a temperature of 73 +/- 2F and a relative humidity of 50 +/- 5% according to ASTM D-618-21 "Standard Practice for Conditioning Plastics for Testing". An MTS Insight 50W Electromechanical Testing System was used for testing and was programmed and controlled using TestWorks version 4.11 software. To hold the sample in the instrument, pneumatic grips were retrofitted to the Insight 50W. Young's modulus, secant modulus, ultimate tensile strength, ultimate elongation and stress at various strain levels were measured and recorded.

### 50% Stress Relaxation

To measure peak load and deformation set at 50% strain, films were tested according to a modified version of ASTM D412-16 (Reapproved 2021) (Standard Test Methods for Vulcanized Rubber and Thermoplastic Elastomers-Tension) using the equipment described above. Film samples were cut to a length of 6 inches and a width of 0.500 inches prior to measurement. All samples were conditioned at a temperature of 73 +/- 2F and a relative humidity of 50 +/- 5% according to the ASTM D-618-21 test "Standard Practice for Conditioning Plastics for Testing" and were tested at a gauge length of 2 inches (initial length) elongated at a speed of 20 inches/min. Each sample was elongated to 50% strain (strained length) and this strain was maintained for 120 sec. After the 120 sec hold, the strain was decreased to 0% at a speed of 20 inches/min. The length that coincided with load value of 0 lbs was recorded (final length). Load was measured throughout the entire cycle and a single cycle was performed on each sample. Duplicate samples of each sample type were tested and the two measurements were averaged and reported. Peak load (the load at 50% strain) was measured and normalized to the equivalent load at a film thickness of 6 mil (4.5 mil for vinyl films). For example, if a measured load for a film was 2 lbs at a thickness of 3 mil, the value that we reported in comparative tables was 4 lbs (2 lbs x (6 mil/3 mil) = 4 lbs). Using the terms described above, the equation used to calculate deformation set is as follows:

$$\text{Deformation set} = ((\text{final length} - \text{initial length})/\text{initial length}) \times 100\%$$

### 25% Heat Stress Relaxation

The modified version of ASTM D412 (Standard Test Methods for Vulcanized Rubber and Thermoplastic

Elastomers-Tension) using the equipment described above was developed to determine various loads after elongation to 25% strain and held at two different temperatures. Film samples were cut to a length of 6 inches and a width of 0.500 inches prior to measurement. All samples were conditioned at a temperature of 73 +/- 2F and a relative humidity of 50 +/- 5% for 40 hours according to ASTM D-618-21 "Standard Practice for Conditioning Plastics for Testing". Each film sample was stretched to 25% strain and held for 2 minutes at room temperature. After the initial 2 minute hold, the entire gauge length of the film was heated for 1 minute to 168 +/- 3F with a heat gun as described below. After 1 minute of heat application, the heat was removed and the film was held at room temperature for an additional 2 minutes. Load was measured throughout the run. Peak load is defined as the maximum load encountered when stretched to 25% strain. Load at initial relaxation is defined as the load measured at the end of the first 2 minute hold at room temperature. Final load is defined as the load measured after both the 1 minute application of heat and the subsequent 2 minute hold at room temperature after heat was removed. For all non-vinyl samples, measured loads were normalized to the equivalent load at a film thickness of 6 mil (0.006 inches). For example, if a measured load for a non-vinyl film was 2 lbs at a thickness of 3 mil, the value that we reported in comparative tables was 4 lbs (2 lbs x (6 mil/3 mil) = 4 lbs). Relaxation values were calculated from these load values as follows:

$$\text{Initial Relaxation} = (1 - (\text{load at initial relaxation}/\text{peak load})) \times 100\%$$

$$\text{Final Relaxation} = (1 - (\text{final load}/\text{load at initial relaxation})) \times 100\%$$

$$\text{Total Relaxation} = (1 - (\text{final load}/\text{peak load})) \times 100\%$$

**25% Elastic Recovery**

To measure elastic recovery at 25% strain, specimens were cut into 4 inch x 0.5 inch strips and marked with two lines one inch apart in the middle of each sample. The samples were stretched to 25% (stretched strain) within 2 seconds, then held at 25% for 30 seconds, and allowed to relax at room temperature. The final distance between the lines was again measured 1 minute, 5 minute and 24 hours after stretching. Residual strain at each of these times was calculated as follows:

$$\text{Residual Strain} = ((\text{final distance} - \text{one inch})/\text{one inch}) \times 100\%$$

**Impact Force Attenuation**

Impact force was measured using a piezoelectric dynamic force sensor, model 208C05 purchased from PCB Piezoelctronics, with a load range in compression from 0 to 5000 lbs and a sensitivity of 1mV/lb. A one inch diameter steel ball with a mass of 8.44 gm was dropped from 36 inches through a tube to impact the sensor (an impact speed of approximately 10 mph). The electric signal from the impacted sensor was routed through a Model 480C02 Signal Conditioner and converted to load values using a National Instruments data acquisition card and LabView software. The impact force was first measured without the placement of a film, and then measurements were taken with film placed on top of the sensor, such that the film was between the sensor and the falling ball. Subtracting the load measured with the film from the load measured without the film determines the amount of load attenuated by the film.

To determine the ratio of load attenuation to "stretchability", the D412 tensile stress at 5% strain was multiplied by the film thickness to determine a value of load/inch. The attenuated load was then divided by this load/inch and added to the tables. The units of this ratio are in lb/lb/in.

**Glass Transition Temperature Data**

Glass transition temperatures were measured using ASTM D3418-15. Samples were heated from - 50 °C to 150 °C at 20 °C per minute, cooled to -50 °C then heated again from - 50 °C to 150 °C at 20 °C per minute. The glass transition temperature was determined from the preliminary (i.e. first) heat on samples that were at least one month old after extrusion.

**Determination of type of Diol and Initiator by GC/MS after hydrolysis**

Samples were hydrolyzed by weighing out about 0.2 g sample in an 8 drum vial, adding 1 mL 5M NaOH/MeOH

and 4 mL DMSO, heating and stirring at 90°C for about 1-2 hour. The vials were cooled and 5 mL DMF and 0.3 mL H3PO4 added. 0.3 mL supernatant was taken into a GC vial and added 1 mL BSA and heated at 90°C for 20 min. Samples were analyzed on a Thermo ISQ LT GC-MS.

**Determination of type of Isocyanate by Pyrolysis GC/MS**

Pyrolysis-GC/MS (Py-GC/MS) was performed on approximately 100 mg of sample. Samples were introduced into a 600°C pyrolysis furnace for 1 minute while simultaneously cryo-trapping the evolved pyrolysates at the head of the GC column. The pyrolysis products (pyrolysates) were then separated by gas chromatography and detected by mass spectrometry. GC analyses were run on an Agilent model 7890A, MS analyses were run on an Agilent model 5977A and the Pyrolysis Unit was a Frontier Labs Multi-Shot Pyrolyzer/Furnace model EGA/PY-3030D.

**Polymer Compositional Data for Aliphatic Polyether TPU's determinate by Nuclear Magnetic Resonance**

TPU samples were solvated to a concentration of TPU for 1H-NMR of 20-30 mg/ml in CDCl3. More concentrated samples (100 mg/ml) were used for 13C-NMR and 1H-13C heteronuclear single-quantum coherence (HSQC) experiments. Chromium acetylacetonate was added (0.01M) for 13C-NMR quantitative analysis. Each 13C-NMR test had 12000 runs to get a high-quality data which usually took about 10 hrs. A 500 MHz Bruker Avance I spectrometer NMR was used for characterization of the hard segment and soft segment and their relative weight percents determined.

The heat gun was a Steinel Electronic Heat Gun Model HG2310 LCD fitted with a 75 mm spreader nozzle. The long dimension of the spreader nozzle's long dimension was positioned approximately 2 cm away from and parallel to the long dimension of the film specimen.

**TPU molecular weight determination by GPC**

Molecular weight and distribution of thermoplastic polyurethane were determined by gel permeation chromatography at 30 °C. The thermoplastic polyurethane was well dissolved in chloroform at a concentration of 2.5 mg/ml. A series of monodisperse polystyrene (MW = 580 to 4,000,000) was used as the standard and refractive Index RI was the detection.

**PVB characterization**

Table 1 shows the different PVB resins used in the study. The Butvar resins were commercial products available from Eastman Chemical Company, Kingsport, TN. The resins PVB1, PVB2 and PVB3 were variants produced for this study using the same methods used to produce the commercial resins but with different molecular weight and residual PVOH content. The %PVOH for all resins was measured according to ASTM D1396.

Molecular weight was measured by size exclusion chromatography (SEC) using low angle laser light scattering (SEC/LALLS) or UV/differential refractometer detectors. As used herein, the term "molecular weight" refers to weight average molecular weight (Mw). The SEC analysis is performed using a Waters 2695 Alliance pump and autosampler with a Waters 410 inline differential refractive index detector and a Waters 2998 PDA inline UV detector (commercially available from Waters Corporation, Milford, Mass.) with Dionex Chromeleon v. 6.8 data acquisition software with an extension pack (commercially available from Thermo Fischer Scientific, Sunnyvale, Calif.). The analysis is performed with a PL Gel Mixed C (5 micron) column and Mixed E (3 micron) columns with an injection volume of 50 microliters at a flow rate of 1.0 mL/minute. Samples are prepared by dissolving between 0.03 and 0.09 grams of resin in 10-15 mL of solvents and then filtering each through a 0.22 micron PTFE filter. Calibrations of the chromatograph are performed using polystyrene standards (commercially available as PSBR250K from American Polymer Standard Corporation, Mentor, Ohio).

Conversions

1 lb = 454 gm
1 in = 25.4 mm
1 mil = 0.0254 mm
1 lb/in = 17.87 gm/mm
1lb/lb/in = 25.4 gm/gm/mm
1 psi = 0.00689 MPa
1 °F = -17.2222 °C

Table 2. List of Raw Materials

| Raw Material | Material | Supplier |
|---|---|---|
| ESTANE ALR CL87A-V | Aliphatic Polycaprolactone Thermoplastic Polyurethane | Lubrizol |
| ESTANE ALR CLC60D-V | Aliphatic Polycaprolactone Thermoplastic Polyurethane | Lubrizol |
| ESTANE ALR CLC93A-V3 Manufacturing Location 1 | Aliphatic Polycaprolactone Thermoplastic Polyurethane | Lubrizol |
| ESTANE ALR CLC93A-V3 Manufacturing Location 2 | Aliphatic Polycaprolactone Thermoplastic Polyurethane | Lubrizol |
| PN25-200 | Aliphatic Polycaprolactone Thermoplastic Polyurethane | Huntsman |
| PN03-221 | Aliphatic Polycaprolactone Thermoplastic Polyurethane | Huntsman |
| ESTANE AG 8451 TPU | Aliphatic Polyether Thermoplastic Polyurethane | Lubrizol |
| Ecdel 9966 | Thermoplastic Copolyester Elastomer | Eastman Chemical Company |
| Butvar B-72 | Polyvinyl Butyral | Eastman Chemical Company |
| Butvar B-79 | Polyvinyl Butyral | Eastman Chemical Company |
| Butvar B-90 | Polyvinyl Butyral | Eastman Chemical Company |
| Butvar B-98 | Polyvinyl Butyral | Eastman Chemical Company |
| PVB1 | Polyvinyl Butyral | Eastman Chemical Company |
| PVB2 | Polyvinyl Butyral | Eastman Chemical Company |
| PVB3 | Polyvinyl Butyral | Eastman Chemical Company |

Table 3. Compositional Determination of Aliphatic Polycaprolactone TPU's by GC/MS and **NMR**

Hydrolytic GC/MS determined the soft segment (polyol) to be caprolactone and Pyrolytic GC/MS determined the isocyanate to be 4, 4'-Methylenebis (cyclohexyl isocyanate). The chain extender was determined to be 1,4-butanediol.NMR determined the compositions as shown below:

| | Lubrizol | Lubrizol | Lubrizol | Lubrizol | Huntsman | Huntsman |
|---|---|---|---|---|---|---|
| | CL 87A | CLC 60D | CLC93A-V3 ML 1 | CLC93A-V3 ML 2 | PN25-200 | PN03-221 |
| **Polyol Initiator** | NPG | NPG | NPG | NPG | DEG | DEG |
| **MW of soft segment** | 1070 | 1134 | 1026 | 1004 | 1328 | 1136 |
| **Wt% of soft segment** | 50.2% | 40.9% | 49.4% | 50.2% | 48.5% | 47.8% |
| **Mw of TPU** | 130,000 | 174,000 | 186,000 | 273,000 | 106,000 | 112,000 |
| **Tg of TPU** | -17.7°C | 11.3°C | -11.1 | -17.5 | -22.3 | -0.6 |

**Table 4. Glass Transition Temperature data for Aliphatic Polycaprolactone TPU blends**

| Example | Formulation Description | Tg |
|---|---|---|
| 1 | 87A | -17.7°C |
| 2 | 75% 87A/25% 60D | -11.9°C |
| 3 | 50% 87A/50% 60D | -6.7°C |
| 4 | 25% 87A/75% 60D | 5.0°C |
| 5 | 60D | 11.3°C |

Table 5. Compositional Determination of Aliphatic Polyether TPU's by GC/MS and **NMR**

| Hydrolytic GC/MS determined the soft segment (polyol) to be polytetramethylene glycol (PTMG) and Pyrolytic GC/MS determined the isocyanate to be 4, 4'-Methylenebis (cyclohexyl isocyanate). The chain extender was determined to be 1,4-butanediol. Other properties are shown below | |
|---|---|
| | Lubrizol |
| | AG8451 |
| **MW of soft segment** | 837 |
| **wt% of soft segment** | 54.53% |
| **Mw of TPU** | 340,000 |
| **Tg of TPU** | -22.5°C |

**Table 6. PVB Properties**

| **PVB Grade** | **Mw** | **%PVOH by weight** |
|---|---|---|
| **B-72** | 170 to 250 K | 17.5 to 20.0 |
| **B-79** | 50 to 80 K | 11.0 to 13.5 |
| **B-90** | 70 to 100 K | 18.5 to 20.5 |
| **B-98** | 40 to 70 K | 18.0 to 20.0 |
| **PVB1** | 150 to 225 | 18.7 |
| **PVB2** | 170 to 250 K | 18.7 |
| **PVB3** | 150 to 225 | 24.0 |

Table 7. D412 Tensile Data for PVC films

| | | D412 Tensile Data | | | | | | | | |
|---|---|---|---|---|---|---|---|---|---|---|
| Example | Film Description | Youngs Modulus (Psi) | Secant Modulus (Psi) | Stress At 2.5% Strain (Psi) | Stress At 5% Strain (Psi) | Stress At 10% Strain (Psi) | Stress At 20% Strain (Psi) | Stress At 100% Strain (Psi) | Ultimate Tensile Strength (Psi) | Ultimate Elongation (%) |
| PVC 1 | Avery SW900-816-M - Gloss Quick Silver Metallic | 62481 | 38140 | 992 | 1245 | 1391 | 1751 | 2592 | 2931 | 145 |
| PVC 2 | Avery Sw900-475-0- Gloss Burgandy | 52099 | 35830 | 811 | 1056 | 1059 | 1543 | 2736 | 4124 | 226 |
| PVC 3 | Avery SW900- 436-0 - Gloss Carmine Red | 40882 | 28883 | 779 | 1035 | 1288 | 1619 | 2472 | 3756 | 238 |
| PVC 4 | Avery SW900- Matte White | 47978 | 34511 | 642 | 845 | 703 | 1285 | 3006 | 3989 | 193 |
| PVC 5 | Avery SW900- 427-0 - Gloss Soft Red | 74650 | 46340 | 1014 | 1271 | 1177 | 1715 | 2940 | 4368 | 225 |
| PVC 6 | Avery SW900- 845-M - Matte Charcoal Metallic | 70718 | 49285 | 1026 | 1298 | 1145 | 1717 | 3296 | 3556 | 124 |
| PVC 7 | Avery SW900- 197-0 - Satin Black | 47745 | 38420 | 783 | 1082 | 1016 | 1607 | 3172 | 5125 | 243 |
| PVC 8 | Avery SW900- 190-0 - Gloss Black | 47895 | 37423 | 833 | 1135 | 1145 | 1662 | 3069 | 4315 | 201 |
| PVC 9 | Avery SW900- 180-0 - Matte Black | 55832 | 42906 | 879 | 1178 | 1061 | 1627 | 3151 | 5031 | 237 |
| PVC 10 | Avery SW900- 109-S - Gloss White Pearl | 50869 | 34215 | 921 | 1161 | 1354 | 1654 | 2469 | 3229 | 188 |
| PVC 11 | Avery SW900- 732-0 - Matte Olive Green | 59405 | 42648 | 923 | 1193 | 1125 | 1662 | 3003 | 4604 | 224 |
| PVC 12 | Avery SW900- 437-S - Gloss Red Pearl | 45901 | 28556 | 775 | 1015 | 1254 | 1563 | 2399 | 3234 | 198 |

(continued)

| | | D412 Tensile Data | | | | | | | | |
|---|---|---|---|---|---|---|---|---|---|---|
| Example | Film Description | Youngs Modulus (Psi) | Secant Modulus (Psi) | Stress At 2.5% Strain (Psi) | Stress At 5% Strain (Psi) | Stress At 10% Strain (Psi) | Stress At 20% Strain (Psi) | Stress At 100% Strain (Psi) | Ultimate Tensile Strength (Psi) | Ultimate Elongation (%) |
| PVC 13 | 3M 1080 Scotchprint Gloss Cinder Spark Red - GP253 | 172969 | 101165 | 2166 | 2392 | 1799 | 2362 | 3692 | 3707 | 100 |
| PVC 14 | 3M 2080 Gloss Ember-Black - GP282 | 86246 | 56433 | 1183 | 1440 | 1237 | 1866 | 3563 | 5296 | 223 |
| PVC 15 | 3M 2080 Satin Frozen Vanilla - SP240 | 111701 | 62456 | 1448 | 1688 | 1539 | 2000 | n/a | 2680 | 78 |
| PVC 16 | 3M 2080 Gloss Light Ivory - G79 | 113075 | 63937 | 1360 | 1633 | 1412 | 1997 | 2927 | 3348 | 147 |
| PVC 17 | 3M 1080 Matte Dark Gray | 159727 | 96753 | 2151 | 2368 | 1821 | 2255 | n/a | 3099 | 77 |
| PVC 18 | 3M 1080 Gloss Flip Psychedelic | 211980 | 117666 | 2544 | 2673 | 1943 | 2489 | 3721 | 4274 | 146 |
| PVC 19 | 3M 1080 Matte Black - M12 | 174988 | 96612 | 2184 | 2353 | 1878 | 2410 | 3718 | 4024 | 127 |
| PVC 20 | 3M 1080 Gloss Black Metallic - G212 | 139617 | 91849 | 2028 | 2311 | 1835 | 2351 | 3582 | 3861 | 124 |
| PVC 21 | 3M 2080 Gloss Midnight Blue - GP 272 | 87374 | 56602 | 1238 | 1518 | 1361 | 1965 | 3406 | 3661 | 125 |

Table 8. Impact and Elastic Recovery Data for PVC Films

| | | Impact Force Attenuation and Ratio Data | | | | 25% Elastic Recovery | | | |
|---|---|---|---|---|---|---|---|---|---|
| Example | Film Description | Film Thickness (mil) | Tensile Load/Inch at 5% strain (lb/in) | Attenuated Load (lb) | Attenuated Load per Load/In (lb/lb/in) | Stretched Strain - 0 min (%) | Residual Strain - 1 min (%) | Residual Strain - 5 min (%) | Residual Strain - 24 hr (%) |
| PVC 1 | Avery SW900-816-M - Gloss Quick Silver Metallic | 5.5 | 6.85 | 465 | 68 | 25 | 6.3 | 3.1 | 0.0 |
| PVC 2 | Avery Sw900-475-0- Gloss Burgandy | | | | | | | | |
| PVC 3 | Avery SW900- 436-0 - Gloss Carmine Red | | | | | | | | |
| PVC 4 | Avery SW900- Matte White | 4.2 | 3.55 | 217 | 61 | 25 | 6.3 | 3.1 | 0.0 |
| PVC 5 | Avery SW900- 427-0 - Gloss Soft Red | 5.0 | 6.35 | 417 | 66 | 25 | 9.4 | 6.3 | 0.0 |
| PVC 6 | Avery SW900- 845-M - Matte Charcoal Metallic | 4.4 | 5.71 | 309 | 54 | 25 | 12.5 | 9.4 | 2.1 |
| PVC 7 | Avery SW900- 197-0 - Satin Black | 4.7 | 5.08 | 350 | 69 | 25 | 9.4 | 6.3 | 1.6 |
| PVC 8 | Avery SW900- 190-0 - Gloss Black | 3.9 | 4.43 | 276 | 62 | 25 | 9.4 | 6.3 | 0.0 |
| PVC 9 | Avery SW900- 180-0 - Matte Black | 4.6 | 5.42 | 290 | 54 | 25 | 9.4 | 6.3 | 0.0 |
| PVC 10 | Avery SW900- 109-S - Gloss White Pearl | 5.6 | 6.50 | 500 | 77 | 25 | 9.4 | 6.3 | 1.6 |
| PVC 11 | Avery SW900- 732-0 - Matte Olive Green | 3.8 | 4.53 | 224 | 49 | 25 | 9.4 | 6.3 | 0.0 |
| PVC 12 | Avery SW900- 437-S - Gloss Red Pearl | | | | | | | | |

(continued)

| | | Impact Force Attenuation and Ratio Data | | | | 25% Elastic Recovery | | | |
|---|---|---|---|---|---|---|---|---|---|
| Example | Film Description | Film Thickness (mil) | Tensile Load/Inch at 5% strain (lb/in) | Attenuated Load (lb) | Attenuated Load per Load/In (lb/lb/in) | Stretched Strain - 0 min (%) | Residual Strain - 1 min (%) | Residual Strain - 5 min (%) | Residual Strain - 24 hr (%) |
| **PVC 13** | **3M 1080 Scotch print Gloss Cinder Spark Red - GP253** | 4.5 | 10.76 | 372 | 35 | 25 | 12.5 | 9.4 | 1.6 |
| **PVC 14** | **3M 2080 Gloss Ember-Black - GP282** | 4.6 | 6.62 | 393 | 59 | 25 | 12.5 | 6.3 | 0.0 |
| **PVC 15** | **3M 2080 Satin Frozen Vanilla - SP240** | 4.6 | 7.76 | 403 | 52 | 25 | 12.5 | 9.4 | 0.0 |
| **PVC 16** | **3M 2080 Gloss Light Ivory - G79** | 4.8 | 7.84 | 485 | 62 | 25 | 12.5 | 6.3 | 0.0 |
| **PVC 17** | **3M 1080 Matte Dark Gray** | | | | | | | | |
| **PVC 18** | **3M 1080 Gloss Flip Psychedelic** | 4.7 | 12.56 | 392 | 31 | 25 | 12.5 | 9.4 | 1.6 |
| **PVC 19** | **3M 1080 Matte Black - M12** | 4.7 | 11.06 | 370 | 33 | 25 | 12.5 | 9.4 | 2.1 |
| **PVC 20** | **3M 1080 Gloss Black Metallic - G212** | | | | | | | | |
| **PVC 21** | **3M 2080 Gloss Midnight Blue - GP 272** | 4.6 | 6.98 | 297 | 43 | 25 | 12.5 | 9.4 | 0.0 |

Table 9. D412 Tensile Data for Films of Blends of TPUs

| | | D412 Tensile Data | | | | | | | | |
|---|---|---|---|---|---|---|---|---|---|---|
| Example | Film Description | Youngs Modulus (Psi) | Secant Modulus (Psi) | Stress At 2.5% Strain (Psi) | Stress At 5% Strain (Psi) | Stress At 10% Strain (Psi) | Stress At 20% Strain (Psi) | Stress At 100% Strain (Psi) | Ultimate Tensile Strength (Psi) | Ultimate Elongation (%) |
| | **87A/60D Blends** | | | | | | | | | |
| **1** | **87A** | 3563 | 3784 | 112 | 218 | 367 | 573 | 1338 | 6573 | 378 |
| **2** | **75% 87A/25% 60D** | 6631 | 6811 | 209 | 360 | 546 | 780 | 1661 | 6817 | 348 |
| **3** | **50% 87A/50% 60D** | 9231 | 9292 | 266 | 439 | 638 | 877 | 1976 | 7881 | 342 |
| **4** | **25% 87A/75% 60D** | 14267 | 12403 | 411 | 619 | 832 | 1065 | 1949 | 6971 | 328 |
| **5** | **60D** | 20087 | 15206 | 573 | 821 | 1037 | 1248 | 1861 | 6244 | 324 |
| | **93AV4 - Manufacturing Location 1 / 60D Blends** | | | | | | | | | |
| **6** | **93A-V4 ML 1** | 2501 | 2469 | 86 | 160 | 263 | 407 | 835 | 4997 | 267 |
| **7** | **93A-V4 ML 1/60D 75/25** | 3349 | 3386 | 128 | 219 | 334 | 482 | 867 | 5123 | 258 |
| **8** | **93A-V4 ML 1/60D 50/50** | 6457 | 6215 | 222 | 348 | 488 | 650 | 1137 | 6038 | 262 |
| **9** | **93A-V4 ML 1/60D 35/65** | 7786 | 7401 | 307 | 463 | 619 | 776 | 1072 | 4982 | 222 |
| **10** | **93A-V4 ML 1/60D 25/75** | 6258 | 6025 | 230 | 352 | 486 | 644 | 1159 | 3600 | 176 |
| | **93AV4 - Manufacturing Location 2 / 60D Blends** | | | | | | | | | |
| **11** | **93A-V4 ML 2** | 2110 | 2095 | 75 | 142 | 233 | 361 | 695 | 4665 | 261 |
| **12** | **93A-V4 ML 2/60D 75/25** | 3369 | 3347 | 128 | 216 | 329 | 474 | 832 | 4108 | 227 |

(continued)

| | | | | | | | | | | |
|---|---|---|---|---|---|---|---|---|---|---|
| | **93AV4 - Manufacturing Location 2 / 60D Blends** | | | | | | | | | |
| **13** | **93A-V4 ML 2/60D 50/50** | 6713 | 6610 | 232 | 365 | 512 | 676 | 1172 | 4747 | 227 |
| **14** | **93A-V4 ML 2/60D 35/65** | 11200 | 8415 | 332 | 486 | 642 | 802 | 1156 | 2204 | 128 |
| **15** | **93A-V4 ML 2/60D 25/75** | 10602 | 10777 | 389 | 604 | 790 | 948 | 1348 | 5707 | 239 |
| | **PN03-221/60D Blends** | | | | | | | | | |
| **16** | **PN03-221** | 3991 | 3252 | 129 | 189 | 285 | 429 | 895 | 5363 | 275 |
| **17** | **PN03-60D 75/25** | 3378 | 3355 | 126 | 231 | 361 | 533 | 939 | 4359 | 233 |
| **18** | **PN03/60D 50/50** | 6308 | 6023 | 213 | 346 | 502 | 696 | 1341 | 3564 | 178 |
| **19** | **PN03/60D 35/65** | 9951 | 8688 | 327 | 495 | 675 | 874 | 1458 | 5341 | 223 |
| **20** | **PN03/60D 25/75** | 9651 | 8915 | 328 | 511 | 700 | 905 | 1519 | 4724 | 195 |

**Table 10. Impact and Elastic Recovery Data for Films of Blends of TPUs**

| | | Impact Force Attenuation and Ratio Data | | | | 25% Elastic Recovery | | | |
|---|---|---|---|---|---|---|---|---|---|
| **Example** | **Film Description** | **Film Thickness (mil)** | **Tensile Load/Inch at 5% strain (lb/in)** | **Attenuated Load (lb)** | **Attenuated Load per Load/In (lb/lb/in)** | **Stretched Strain - 0 min (%)** | **Residual Strain - 1 min (%)** | **Residual Strain - 5 min (%)** | **Residual Strain - 24 hr (%)** |
| | **87A/60D Blends** | | | | | | | | |
| **1** | **87A** | 7.5 | 1.64 | 459 | 280 | 25 | 1.6 | 0.0 | 0.0 |
| **2** | **75% 87A/25% 60D** | 8.5 | 3.06 | 467 | 152 | 25 | 2.1 | 0.0 | 0.0 |
| **3** | **50% 87A/50% 60D** | 9.0 | 3.95 | 457 | 116 | 25 | 6.3 | 2.1 | 0.0 |
| **4** | **25% 87A/75% 60D** | 7.5 | 4.65 | 402 | 87 | 25 | 6.3 | 3.1 | 0.0 |
| **5** | **60D** | 7.5 | 6.16 | 358 | 58 | 25 | 12.5 | 6.3 | 0.0 |
| | **93AV4 - Manufacturing Location 1 / 60D Blends** | | | | | | | | |
| **6** | **93A-V4 ML 1** | 7.5 | 1.20 | 451 | 376 | 25 | 1.6 | 0.0 | 0.0 |
| **7** | **93A-V4 ML 1/60D 75/25** | 9.0 | 1.97 | 474 | 241 | 25 | 2.1 | 1.6 | 0.0 |
| **8** | **93A-V4 ML 1/60D 50/50** | 7.5 | 2.61 | 350 | 134 | 25 | 3.1 | 1.6 | 0.0 |
| **9** | **93A-V4 ML 1/60D 35/65** | 8.0 | 3.70 | 410 | 111 | 25 | 6.3 | 2.1 | 0.0 |
| **10** | **93A-V4 ML 1/60D 25/75** | 9.0 | 3.17 | 475 | 150 | 25 | 6.3 | 3.1 | 0.0 |
| | **93AV4 - Manufacturing Location 2 / 60D Blends** | | | | | | | | |
| **11** | **93A-V4 ML 2** | 7.5 | 1.06 | 424 | 399 | 25 | 1.6 | 0.0 | 0.0 |
| **12** | **93A-V4 ML 2/60D 75/25** | 9.0 | 1.94 | 491 | 253 | 25 | 2.1 | 0.0 | 0.0 |

(continued)

| | | | | | | | | | |
|---|---|---|---|---|---|---|---|---|---|
| | **93AV4 - Manufacturing Location 2 / 60D Blends** | | | | | | | | |
| **13** | **93A-V4 ML 2/60D 50/50** | 6.5 | 2.37 | 297 | 125 | 25 | 3.1 | 1.6 | 0.0 |
| **14** | **93A-V4 ML 2/60D 35/65** | 9.5 | 4.61 | 515 | 112 | 25 | 6.3 | 2.1 | 0.0 |
| **15** | **93A-V4 ML 2/60D 25/75** | 7.0 | 4.23 | 361 | 85 | 25 | 6.3 | 3.1 | 0.0 |
| | **PN03-221/60D Blends** | | | | | | | | |
| **16** | **PN03-221** | 9.5 | 1.80 | 585 | 326 | 25 | 1.6 | 0.0 | 0.0 |
| **17** | **PN03-60D 75/25** | 8.5 | 2.00 | 481 | 245 | 25 | 2.1 | 1.6 | 0.0 |
| **18** | **PN03/60D 50/50** | 8.0 | 2.80 | 386 | 140 | 25 | 3.1 | 1.6 | 0.0 |
| **19** | **PN03/60D 35/65** | 7.5 | 3.70 | 348 | 94 | 25 | 3.1 | 1.6 | 0.0 |
| **20** | **PN03/60D 25/75** | 7.0 | 3.60 | 341 | 95 | 25 | 6.3 | 2.1 | 0.0 |

Table 11. Modified D412 50% Relaxation and 25% Relaxation Data for Films of Blends of TPUs

| | | 50% Relaxation | | | 25% Heat Relaxation | | | | | | |
|---|---|---|---|---|---|---|---|---|---|---|---|
| Example | Formulation Description | Peak Load (lb) | Deformation Set (%) | Thickness (mil) | Peak Load (lb) | Load at initial Relaxation (lb) | Final Load (lb) | Initial Relaxation (%) | Final Relaxation (%) | Total Relaxation (%) | Visual Optical Properties |
| **PVC 8** | **Avery SW900 Gloss Black** | 4.39 | 49.8 | 4.5 | 4.03 | 1.12 | 0.16 | 71.7 | 83.9 | 95.4 | Opaque |
| **PVC 19** | **3M 1080 Matte Black** | 5.61 | 50.2 | 4.5 | 5.75 | 1.60 | 0.22 | 72.2 | 86.3 | 96.2 | Opaque |
| | **87A/60D Blends** | | | | | | | | | | |
| **1** | **87A** | 2.55 | 24.3 | 6 | 1.51 | 0.88 | 0.15 | 42.1 | 83.4 | 90.4 | Clear |
| **2** | **87A/60D 75/25** | 2.81 | 33.3 | 6 | 1.79 | 0.88 | 0.13 | 50.5 | 84.8 | 92.5 | Clear |
| **3** | **87A/60D 50/50** | 3.16 | 42.1 | 6 | 2.41 | 0.96 | 0.14 | 60.0 | 85.6 | 94.2 | Clear |
| **4** | **87A/60D 25/75** | 4.18 | 47.2 | 6 | 2.69 | 0.83 | 0.11 | 69.0 | 86.7 | 95.9 | Clear |
| **5** | **60D** | 4.39 | 49.1 | 6 | 3.37 | 0.75 | 0.06 | 77.8 | 92.5 | 98.3 | Clear |
| | **93AV4-60D Blends** | | | | | | | | | | |
| **6** | **93A-V4 ML 1** | 2.20 | 25.1 | 6 | 1.58 | 0.84 | 0.10 | 46.7 | 88.3 | 93.8 | Clear |
| **7** | **93A-V4 ML 1/60D 75/25** | 2.67 | 34.4 | 6 | 1.87 | 0.84 | 0.09 | 54.4 | 89.1 | 95.1 | Clear |
| **8** | **93A-V4 ML 1/60D 50/50** | 3.27 | 43.4 | 6 | 2.44 | 0.84 | 0.06 | 65.7 | 92.7 | 97.5 | Clear |
| **9** | **93A-V4 ML 1/60D 35/65** | 3.32 | 46.7 | 6 | 2.81 | 0.81 | 0.04 | 71.0 | 94.6 | 98.4 | Clear |
| **10** | **93A-V4 ML 1/60D 25/75** | 3.56 | 48.0 | 6 | 3.10 | 0.80 | 0.04 | 74.3 | 94.8 | 98.7 | Clear |
| **11** | **93A-V4 ML 2** | 1.91 | 23.7 | 6 | 1.42 | 0.75 | 0.09 | 46.8 | 88.6 | 93.9 | Clear |

(continued)

| | | | | | | | | | | | |
|---|---|---|---|---|---|---|---|---|---|---|---|
| | **93AV4-60D Blends** | | | | | | | | | | |
| **12** | **93A-V4 ML 2/60D 75/25** | 2.31 | 31.7 | 6 | 1.79 | 0.80 | 0.06 | 55.0 | 92.0 | 96.4 | Clear |
| **13** | **93A-V4 ML 2/60D 50/50** | 2.75 | 42.7 | 6 | 2.41 | 0.81 | 0.05 | 66.2 | 93.3 | 97.7 | Clear |
| **14** | **93A-V4 ML 2/60D 35/65** | 3.26 | 46.1 | 6 | 2.63 | 0.78 | 0.05 | 70.1 | 93.6 | 98.1 | Clear |
| **15** | **93A-V4 ML 2/60D 25/75** | 3.30 | 47.7 | 6 | 3.12 | 0.81 | 0.05 | 74.2 | 93.9 | 98.4 | Clear |
| | **PN03-221/60D Blends** | | | | | | | | | | |
| **16** | **PN03-221** | 2.08 | 25.5 | 6 | 1.42 | 0.77 | 0.08 | 45.7 | 90.3 | 94.7 | Clear |
| **17** | **PN03-60D 75/25** | 2.39 | 35.1 | 6 | 1.89 | 0.84 | 0.06 | 55.4 | 93.4 | 97.1 | Clear |
| **18** | **PN03/60D 50/50** | 2.97 | 44.1 | 6 | 2.25 | 0.83 | 0.06 | 63.2 | 93.0 | 97.4 | Clear |
| **19** | **PN03/60D 35/65** | 3.42 | 47.1 | 6 | 2.57 | 0.76 | 0.04 | 70.5 | 94.4 | 98.4 | Clear |
| **20** | **PN03/60D 25/75** | 3.61 | 48.3 | 6 | 3.09 | 0.81 | 0.05 | 73.9 | 94.3 | 98.5 | Clear |

Table 12. D412 Tensile Data for Films of Caprolactone TPUs with PVB

| | | D412 Tensile Data | | | | | | | | |
|---|---|---|---|---|---|---|---|---|---|---|
| Example | Film Description | Youngs Modulus (Psi) | Secant Modulus (Psi) | Stress At 2.5% Strain (Psi) | Stress At 5% Strain (Psi) | Stress At 10% Strain (Psi) | Stress At 20% Strain (Psi) | Stress At 100% Strain (Psi) | Ultimate Tensile Strength (Psi) | Ultimate Elongation (%) |
| | **87A/PVB blends** | | | | | | | | | |
| **21** | **90% 87A/10% B98** | 3647 | 3434 | 102 | 186 | 283 | 406 | 886 | 6244 | 383 |
| **22** | **80% 87A/20% B98** | 11117 | 8946 | 281 | 421 | 568 | 733 | 1368 | 6244 | 338 |
| **23** | **90% 87A/10% B90** | 4071 | 3744 | 115 | 199 | 299 | 424 | 933 | 6149 | 371 |
| **24** | **80% 87A/20% B90** | 10821 | 9381 | 295 | 447 | 602 | 772 | 1395 | 6305 | 330 |
| **25** | **90% 87A/10% B72** | 2312 | 2162 | 106 | 181 | 287 | 427 | 616 | 3889 | 394 |
| **26** | **80% 87A/20% B72** | 5785 | 5121 | 242 | 379 | 548 | 755 | 933 | 4047 | 335 |
| **27** | **90% 87A/10% PVB1** | 4370 | 3863 | 131 | 205 | 309 | 437 | 928 | 5707 | 364 |
| **28** | **80% 87A/20% PVB1** | 9596 | 7787 | 275 | 403 | 541 | 695 | 1184 | 5198 | 311 |
| **29** | **90% 87A/10% PVB2** | 1811 | 1853 | 83 | 154 | 249 | 375 | 581 | 3895 | 383 |
| **30** | **80% 87A/20% PVB2** | 6276 | 4871 | 256 | 382 | 522 | 686 | 768 | 3005 | 302 |
| **31** | **90% 87A/10% PVB3** | 3733 | 3476 | 119 | 203 | 312 | 449 | 897 | 4923 | 359 |
| **32** | **80% 87A/20% PVB3** | 8255 | 7195 | 283 | 436 | 601 | 790 | 1167 | 4226 | 307 |

(continued)

| | 87A/PVB/Admex 770 blends | | | | | | | | | |
|---|---|---|---|---|---|---|---|---|---|---|
| **33** | **87A/90B/770 90%/8.5%/1.5%** | 1869 | 1868 | 80 | | | | 580 | 2527 | 309 |
| **34** | **87A/90B/770 80%/17%/3%** | 3054 | 2768 | 131 | 218 | 330 | 480 | 685 | 2351 | 291 |
| **35** | **87A/BY/770 90%/8.5%/1.5%** | 1895 | 1872 | 79 | 144 | 235 | 356 | 606 | 4015 | 387 |
| **36** | **87A/BY/770 80%/17%/3%** | 2724 | 2509 | 120 | 198 | 302 | 437 | 656 | 3652 | 365 |
| **37** | **87A/ZB/770 90%/8.5%/1.5%** | 1683 | 1706 | 79 | 143 | 233 | 355 | 548 | 3868 | 411 |
| **38** | **87A/ZB/770 80%/17%/3%** | 3178 | 2860 | 142 | 229 | 336 | 471 | 641 | 3336 | 352 |

**Table 13. Impact and Elastic Recovery Data for Films of Caprolactone TPUs with PVB**

| | | Impact Force Attenuation and Ratio Data | | | | 25% Elastic Recovery | | | |
|---|---|---|---|---|---|---|---|---|---|
| **Example** | **Film Description** | **Film Thickness (mil)** | **Tensile Load/Inch** at 5% **strain (lb/in)** | **Attenuated Load (lb)** | **Attenuated Load per Load/In (lb/lb/in)** | **Stretched Strain - 0 min (%)** | **Residual Strain - 1 min (%)** | **Residual Strain - 5 min (%)** | **Residual Strain - 24 hr (%)** |
| | **87A/PVB blends** | | | | | | | | |
| **21** | **90% 87A/10% B98** | 7.0 | 1.30 | 448 | 345 | 25 | 3.1 | 1.6 | 0.0 |
| **22** | **80% 87A/20% B98** | 6.5 | 2.74 | 441 | 161 | 25 | 6.3 | 2.1 | 0.0 |
| **23** | **90% 87A/10% B90** | 7.5 | 1.49 | 493 | 330 | 25 | 3.1 | 2.1 | 0.0 |
| **24** | **80% 87A/20% B90** | 10.0 | 4.47 | 631 | 141 | 25 | 6.3 | 3.1 | 0.0 |
| **25** | **90% 87A/10% B72** | 8.0 | 1.45 | 484 | 334 | 25 | 3.1 | 1.6 | 0.0 |
| **26** | **80% 87A/20% B72** | 9.0 | 3.41 | 577 | 169 | 25 | 4.2 | 2.1 | 0.0 |
| **27** | **90% 87A/10% PVB1** | 7.5 | 1.54 | 455 | 296 | 25 | 3.1 | 1.6 | 0.0 |
| **28** | **80% 87A/20% PVB1** | 8.0 | 3.22 | 505 | 157 | 25 | 6.3 | 2.1 | 0.0 |
| 29 | **90% 87A/10% PVB2** | 7.0 | 1.08 | 476 | 441 | 25 | 3.1 | 1.6 | 0.0 |
| **30** | **80% 87A/20% PVB2** | 9.0 | 3.44 | 605 | 176 | 25 | 6.3 | 3.1 | 0.0 |
| **31** | **90% 87A/10% PVB3** | 9.0 | 1.83 | 606 | 331 | 25 | 2.1 | 0.0 | 0.0 |
| **32** | **80% 87A/20% PVB3** | 7.5 | 3.27 | 496 | 152 | 25 | 6.3 | 3.1 | 0.0 |

(continued)

| | 87A/PVB/Admex 770 blends | | | | | | | | |
|---|---|---|---|---|---|---|---|---|---|
| **33** | **87A/90B/770 90%/8.5%/1.5%** | 8.5 | 1.21 | 577 | 475 | 25 | 2.1 | 0.0 | 0.0 |
| **34’** | **87A/90B/770 80%/17%/3%** | 7.0 | 1.52 | 441 | 290 | 25 | 3.1 | 2.1 | 0.0 |
| **35** | **87A/BY/770 90%/8.5%/1.5%** | 8.0 | 1.15 | 545 | 474 | 25 | 2.1 | 0.0 | 0.0 |
| **36** | **87A/BY/770 80%/17%/3%** | 8.0 | 1.58 | 539 | 341 | 25 | 6.3 | 3.1 | 0.0 |
| **37** | **87A/ZB/770 90%/8.5%/1.5%** | 9.0 | 1.29 | 571 | 443 | 25 | 3.1 | 1.6 | 0.0 |
| **38** | **87A/ZB/770 80%/17%/3%** | 9.0 | 2.06 | 589 | 285 | 25 | 6.3 | 3.1 | 0.0 |

**Table 14. Modified D412 50% Relaxation and 25% Heat Relaxation Data for Films of Caprolactone TPUs with PVB**

| | | 50% Relaxation | | | 25% Heat Relaxation | | | | | | |
|---|---|---|---|---|---|---|---|---|---|---|---|
| **Example** | **Formulation Description** | **Peak Load (lb)** | **Deformation Set (%)** | **Thickness (mil)** | **Peak Load (lb)** | **Load at initial Relaxation (lb)** | **Final Load (lb)** | **Initial Relaxation (%)** | **Final Relaxation (%)** | **Total Relaxation (%)** | **Visual Optical Properties** |
| **PVC 8** | **Avery SW900 Gloss Black** | 4.39 | 49.8 | 4.5 | 4.03 | 1.12 | 0.16 | 71.7 | 83.9 | 95.4 | Opaque |
| **PVC 19** | **3M 1080 Matte Black** | 5.61 | 50.2 | 4.5 | 5.75 | 1.60 | 0.22 | 72.2 | 86.3 | 96.2 | Opaque |
| | **87A/PVB blends** | | | | | | | | | | |
| **/21** | **90% 87A/10% B98** | 2.28 | 42.4 | 6 | 1.52 | 0.57 | 0.06 | 62.8 | 89.8 | 96.2 | Clear |
| **22** | **80% 87A/20% B98** | 3.42 | 47.7 | 6 | 2.45 | 0.68 | 0.04 | 72.2 | 93.5 | 98.2 | Clear |
| **23** | **90% 87A/10% B90** | 2.37 | 41.9 | 6 | 1.69 | 0.55 | 0.05 | 67.5 | 90.9 | 97.0 | Clear |
| **24** | **80% 87A/20% B90** | 3.31 | 48.3 | 6 | 2.68 | 0.72 | 0.05 | 73.2 | 93.1 | 98.1 | Slightly Hazy |
| **25** | **90% 87A/10% B72** | 2.67 | 37.5 | 6 | 1.62 | 0.98 | 0.04 | 58.4 | 95.5 | 98.1 | Hazy |
| **26** | **80% 87A/20% B72** | 3.79 | 46.6 | 6 | 2.21 | 1.17 | 0.04 | 61.4 | 96.6 | 98.7 | Hazy |
| **27** | **90% 87A/10% PVB1** | 2.40 | 41.8 | 6 | 1.68 | 0.58 | 0.05 | 65.4 | 91.7 | 97.1 | Slightly Hazy |
| **28** | **80% 87A/20% PVB1** | 3.18 | 49.0 | 6 | 2.51 | 0.62 | 0.06 | 75.2 | 91.0 | 97.8 | Hazy |
| **29** | **90% 87A/10% PVB2** | 2.83 | 37.5 | 6 | 1.64 | 0.71 | 0.09 | 57.1 | 87.2 | 94.5 | Hazy |
| **30** | **80% 87A/20% PVB2** | 3.62 | 48.2 | 6 | 2.32 | 0.63 | 0.07 | 73.0 | 89.2 | 97.1 | Hazy |
| **31** | **90% 87A/10% PVB3** | 2.70 | 41.6 | 6 | 1.77 | 0.61 | 0.06 | 65.3 | 90.0 | 96.5 | Slightly Hazy |

(continued)

| | | | | | | | | | | | |
|---|---|---|---|---|---|---|---|---|---|---|---|
| | **87A/PVB blends** | | | | | | | | | | |
| **32** | **80% 87A/20% PVB3** | 2.16 | 41.2 | 6 | 2.72 | 0.76 | 0.05 | 72.2 | 94.1 | 98.4 | Hazy |
| | **87A/PVB/Admex 770 blends** | | | | | | | | | | |
| **33** | **87A/90B/770 90%/8.5%/1.5%** | 2.53 | 34.3 | 6 | 1.66 | 0.77 | 0.10 | 53.5 | 87.5 | 94.2 | Clear |
| **34** | **87A/90B/770 80%/17%/3%** | 3.17 | 41.8 | 6 | 2.51 | 0.89 | 0.08 | 64.4 | 91.2 | 96.9 | Slightly Hazy |
| **35** | **87A/PVB1/770 90%/8.5%/1.5%** | 2.46 | 35.1 | 6 | 1.96 | 1.22 | 0.04 | 60.4 | 97.0 | 98.8 | Clear |
| **36** | **87A/PVB1/770 80%/17%/3%** | 2.79 | 42.5 | 6 | 2.31 | 0.81 | 0.07 | 64.7 | 90.9 | 96.8 | Slightly Hazy |
| **37** | **87A/PVB2/770 90%/8.5%/1.5%** | 2.42 | 34.3 | 6 | 2.12 | 1.40 | 0.03 | 59.6 | 97.8 | 99.1 | Slightly Hazy |
| **38** | **87A/PVB2/770 80%/17%/3%** | 2.95 | 40.1 | 6 | 1.85 | 1.11 | 0.06 | 62.4 | 94.3 | 97.9 | Slightly Hazy |

**Table 15. D412 Tensile Data for Films of Polyether TPU with PVB and Caprolactone TPU with PCCE**

| | | D412 Tensile Data | | | | | | | | |
|---|---|---|---|---|---|---|---|---|---|---|
| **Example** | **Film Description** | **Youngs Modulus (Psi)** | **Secant Modulus (Psi)** | **Stress At 2.5% Strain (Psi)** | **Stress At 5% Strain (Psi)** | **Stress At 10% Strain (Psi)** | **Stress At 20% Strain (Psi)** | **Stress At 100% Strain (Psi)** | **Ultimate Tensile Strength (Psi)** | **Ultimate Elongation (%)** |
| | **Estane AG8451 PVB Blends** | | | | | | | | | |
| **39** | **Estane AG8451** | 1071 | 858 | 57 | 55 | 100 | 154 | 350 | 6132 | 550 |
| **40** | **B98 10%** | 543 | 555 | 30 | 51 | 95 | 155 | 218 | 2641 | 502 |
| **41** | **B79 10%** | 471 | 849 | 11 | 33 | 74 | 127 | 216 | 2828 | 525 |
| **42** | **B90 10%** | 495 | 397 | 28 | 51 | 92 | 151 | 207 | 2110 | 480 |
| **43** | **B72 10%** | 698 | 573 | 20 | 58 | 107 | 170 | 280 | 2065 | 408 |
| **44** | **PVB1 10%** | 791 | 773 | 34 | 64 | 107 | 169 | 244 | 2562 | 477 |
| **45** | **PVB1 10%** | 565 | 639 | 26 | 59 | 108 | 176 | 211 | 2277 | 449 |
| **46** | **PVB310%** | 712 | 884 | 26 | 56 | 109 | 178 | 314 | 2081 | 389 |
| | **87A/Ecdel 9966 Blends** | | | | | | | | | |
| **47** | **80% 87A/20% Edcel** | 7319 | 5943 | 112 | 218 | 367 | 573 | 1338 | 6573 | 378 |
| **48** | **75% 87A/25% Edcel** | 6823 | 6174 | 209 | 360 | 546 | 780 | 1661 | 6817 | 348 |
| **49** | **70% 87A/30% Edcel** | 7376 | 6534 | 266 | 439 | 638 | 877 | 1976 | 7881 | 342 |
| **50** | **50% 87A/50% Edcel** | 5869 | 5543 | 411 | 619 | 832 | 1065 | 1949 | 6971 | 328 |

Table 16. Impact and Elastic Recovery Data for Films of Polyether TPU with PVB and Caprolactone TPU with PCCE

| | | Impact Force Attenuation and Ratio Data | | | | 25% Elastic Recovery | | | |
|---|---|---|---|---|---|---|---|---|---|
| **Example** | **Film Description** | **Film Thickness (mil)** | **Tensile Load/Inch at 5% strain (lb/in)** | Attenuated **Load (lb)** | **Attenuated** Load **per Load/In (lb/lb/in)** | **Stretched Strain - 0 min (%)** | **Residual Strain - 1 min (%)** | **Residual Strain - 5 min (%)** | **Residual Strain - 24 hr (%)** |
| | **Estane AG8451 PVB Blends** | | | | | | | | |
| **39** | **Estane AG8451** | 9.0 | 0.50 | 623 | 1248 | 25 | 0.0 | 0.0 | 0.0 |
| **40** | **B98 10%** | 9.0 | 0.46 | 612 | 1334 | 25 | 2.1 | 0.0 | 0.0 |
| **41** | **B79 10%** | 10.5 | 0.34 | 742 | 2167 | 25 | 1.6 | 0.0 | 0.0 |
| **42** | **B90 10%** | 10.5 | 0.54 | 711 | 1318 | 25 | 2.1 | 0.0 | 0.0 |
| **43** | **B72 10%** | 10.0 | 0.58 | 601 | 1034 | 25 | 2.1 | 0.0 | 0.0 |
| **44** | **PVB1 10%** | 11.0 | 0.70 | 651 | 929 | 25 | 2.1 | 0.0 | 0.0 |
| **45** | **PVB1 10%** | 11.0 | 0.65 | 634 | 971 | 25 | 2.1 | 0.0 | 0.0 |
| **46** | **PVB310%** | 10.0 | 0.56 | 691 | 1241 | 25 | 2.1 | 0.0 | 0.0 |
| | **87A/Ecdel 9966 Blends** | | | | | | | | |
| **47** | **80% 87A/20% Edcel** | 7.5 | 1.64 | 459 | 280 | 25 | 1.6 | 0.0 | 0.0 |
| **48** | **75% 87A/25% Edcel** | 8.5 | 3.06 | 467 | 152 | 25 | 2.1 | 1.6 | 0.0 |
| **49** | **70% 87A/30% Edcel** | 9.0 | 3.95 | 457 | 116 | 25 | 2.1 | 1.6 | 0.0 |
| **50** | **50% 87A/50% Edcel** | 7.5 | 4.65 | 402 | 87 | 25 | 3.1 | 2.1 | 0.0 |

Table 17. Modified D412 50% Relaxation and 25% Relaxation Data for Films of Polyether TPU with PVB and Caprolactone TPU with PCCE

| | | 50% Relaxation | | | 25% Heat Relaxation | | | | | | |
|---|---|---|---|---|---|---|---|---|---|---|---|
| Example | Formulation Description | Peak Load (lb) | Deformation Set (%) | Thickness (mil) | Peak Load (lb) | Load at initial Relaxation (lb) | Final Load (lb) | Initial Relaxation (%) | Final Relaxation (%) | Total Relaxation (%) | Visual Optical Properties |
| PVC 8 | Avery SW900 Gloss Black | 4.39 | 49.8 | 4.5 | 4.03 | 1.12 | 0.16 | 71.7 | 83.9 | 95.4 | Opaque |
| PVC 19 | 3M 1080 Matte Black | 5.61 | 50.2 | 4.5 | 5.75 | 1.60 | 0.22 | 72.2 | 86.3 | 96.2 | Opaque |
| | Estane AG8451 PVB Blends | | | | | | | | | | |
| 39 | AG8451 | 0.78 | 26.3 | 6 | 0.52 | 0.32 | 0.07 | 39.3 | 79.0 | 87.2 | Clear |
| 40 | 90% AG8451/10% B98 | 0.89 | 32.3 | 6 | 0.68 | 0.45 | 0.03 | 60.6 | 94.0 | 97.6 | Hazy |
| 41 | 90% AG8451/10% B79 | 0.83 | 31.8 | 6 | 0.48 | 0.21 | 0.03 | 55.4 | 85.3 | 93.4 | Hazy |
| 42 | 90% AG8451/10% B90 | 0.99 | 35.1 | 6 | 0.53 | 0.22 | 0.04 | 58.0 | 82.3 | 92.5 | Hazy |
| 43 | 90% AG8451/10% B72 | 0.87 | 33.8 | 6 | 0.59 | 0.26 | 0.04 | 55.4 | 85.5 | 93.5 | Hazy |
| 44 | 90% AG8451/10% PVB1 | 0.98 | 31.3 | 6 | 0.65 | 0.45 | 0.03 | 60.8 | 93.0 | 97.3 | Hazy |
| 45 | 90% AG8451/10% PVB1 | 2.43 | 40.2 | 6 | 0.64 | 0.27 | 0.04 | 57.8 | 85.6 | 93.9 | Hazy |
| 46 | 90% AG8451/10% PVB3 | 1.00 | 29.1 | 6 | 0.65 | 0.26 | 0.03 | 59.7 | 87.9 | 95.1 | Hazy |

(continued)

| | 87A/Ecdel 9966 Blends | | | | | | | | | | |
|---|---|---|---|---|---|---|---|---|---|---|---|
| **47** | **87A/Ecdel 80/20** | 3.58 | 26.5 | 6 | 2.27 | 1.24 | 0.18 | 45.3 | 85.7 | 92.2 | Clear |
| **48** | **87A/Ecdel 75/25** | 4.08 | 26.1 | 6 | 2.62 | 1.51 | 0.22 | 42.5 | 85.4 | 91.6 | Clear |
| **49** | **87A/Ecdel 70/30** | 3.55 | 25.9 | 6 | 2.67 | 1.50 | 0.19 | 44.0 | 87.4 | 92.9 | Clear |
| **59** | **87A/Ecdel 50/50** | 4.77 | 25.5 | 6 | 3.64 | 2.22 | 0.60 | 39.0 | 72.8 | 83.4 | Clear |

Tables 7, 9, 12 and 15 above contain ASTM D412 tensile data. Examples PVC 1 through PVC 21 in Table 7 are commercial PVC automotive wrap films. Examples 47 through 50 in table 15 are blends of TPU 87A with Ecdel PCCE. Comparing the values of stress at 5% strain, it can be seen that the TPU/PCCE blends require much less stress to pull to 5% strain than the commercial PVC films. These TPU/PCCE films would be much easier to install on an automobile and cause less fatigue on the installer as less force would be required compared to the PVC films.

Tables 8, 10, 13 and 16 above contain Attenuated Load values from the Impact Force Attenuation Test. Values of tensile load per inch of width at 5% strain were calculated from the D412 values of stress at 5% strain by multiplying the stress at 5% strain by the thickness of the samples used in the Impact Force Attenuation Test. The ratio of Attenuated Load per Load/inch at 5% strain were then calculated. Examples PVC 1 through PVC 21 in Table 8 are commercial PVC automotive wrap films. Examples 47 through 50 in table 16 are blends of TPU 87A with Ecdel PCCE. Comparing the values of the ratio, it can be seen that the TPU/PCCE blends provide much more load attenuation (i.e. rock resistance) with much less stress to pull to 5% strain than the commercial PVC films. These TPU/PCCE films would thus be preferable both from a rock resistance and installation standpoint compared to the PVC films.

Tables 8, 10, 13 and 16 above also contain values of residual load after time from the 25% Elastic Recovery Test. Examples 47 through 50 in table 16 are blends of TPU 87A with Ecdel PCCE. Comparing examples 47 through 50 with example 1 show that the TPU/PCCE blends do not snap back as quickly as the pure TPU. These TPU/PCCE films would be much easier to work into complex shapes during installation on an automobile compared to the neat TPU films.

Tables 11, 14 and 17 above show values of final load from the 25% Heat Relaxation Test. Examples 47 through 50 in table 16 are blends of TPU 87A with Ecdel PCCE. Examples PVC 8 and PVC 19 are provided for comparison. Comparing examples 47 through 50 with PVC 8 and PVC 19 show that the TPU/PCCE blends have a lower final load after heating than commercial PVC films. These TPU/PCCE films would have a reduced tendency to pull back away from the automotive body after installation than the commercial PVC films.

Tables 11, 14 and 17 above also contain values of deformation set from the 50% Relaxation Test.

The polymer blends of the invention exhibit lower or comparable peak load, lower or comparable final load, and lower or comparable total load reduction and are optically clear when compared to typical plasticized PVC films used in automotive vehicle wraps.

## Claims

**1.** A thermoplastic film, comprising:

a. a thermoplastic polymer layer comprising:

i. a thermoplastic polyurethane polymer comprising the reaction product of:

1. an aliphatic diisocyanate,
2. an aliphatic polyol, and
3. a chain extending agent; and

ii. a copolyester polyether polymer comprising the reaction product of:

1. an aliphatic diacid;
2. an aliphatic diol;
3. an aliphatic polyether polyol; and
4. a branching agent

wherein the thermoplastic polyurethane polymer is present in the thermoplastic polymer layer in an amount from 65 to 98 percent by weight; and
b. a patterned adhesive layer,
wherein the thermoplastic film:

when tested by a 25% Heat Relaxation Test at a thickness of 0.0001524 m (0.006 inches), exhibits a final load from 0.222 to 1.334 or from 0.445 to 0.890 N (0.05 to 0.30 or from 0.10 to 0.20 pounds force); and
when tested by a 25% Elastic Recovery test, exhibits a residual strain at one minute of 2% or greater, the 25% Heat Relaxation and the 25% Elastic Recovery test being determined as described in the description.

**2.** The thermoplastic film of claim 1, wherein the thermoplastic film further comprises a colored layer, positioned between

the thermoplastic layer and the patterned adhesive layer.

**3.** The thermoplastic film of claim 1, wherein the thermoplastic film further comprises a colored layer, positioned between the thermoplastic layer and a protective topcoat; or wherein the thermoplastic film further comprises a protective topcoat provided with a pigment, positioned on the thermoplastic polymer layer; or

wherein the patterned adhesive layer comprises a pigment; or
wherein the thermoplastic layer comprises a pigment.

**4.** The thermoplastic film of claim 1, wherein the thermoplastic film, when tested by ASTM D-412, exhibits a stress at 5% strain of no greater than 4826.33 kPa (700 psi); or wherein the thermoplastic film, when tested by ASTM D-412, exhibits a stress at 5% strain of from 1378.95 to 4826.33 kPa ( 200 to 700 psi).

**5.** The thermoplastic film of claim 1, wherein the thermoplastic film, when tested by an Impact Force Attenuation Test, exhibits an attenuated load, and when tested by ASTM D-412, exhibits a tensile load per 0.0254m (inch) at 5% strain, and wherein a ratio of the attenuated load to the tensile load per 0.0254m (inch) at 5% strain is from 80:1 to 300:1.

**6.** The thermoplastic film of any of the preceding claims, wherein the copolyester polyether polymer comprises poly(cyclohexylene dimethylene cyclohexanedicarboxylate), glycol and acid comonomer (PCCE).

**7.** The thermoplastic film of any of the preceding claims, wherein the thermoplastic polyurethane polymer comprises a soft segment and a hard segment, and wherein the soft segment comprises from 40 to 50 percent by weight of the thermoplastic polyurethane polymer; or

wherein the thermoplastic polyurethane polymer is present in the thermoplastic polymer layer in an amount from 70 to 97 percent by weight; or
wherein the thermoplastic polyurethane layer further comprises one or more of: an aliphatic polyether thermoplastic polyurethane; ethylene vinyl acetate (EVA); polyvinyl chloride; a thermoplastic polyamide, a thermoplastic polyolefin elastomer, a thermoplastic styrene block copolymer; an aromatic thermoplastic copolyester ether elastomer; or a polyvinyl acetal; or
wherein the thermoplastic polyurethane polymer or thermoplastic polyurethane polymer blend has a Tg from -30°C to 60° C, the Tg being measured according ASTM D3418-15 and as described in the description; or
wherein the thermoplastic polyurethane has a weight average molecular weight from 50,000 daltons to 400,000 daltons; or
wherein the thermoplastic polyurethane polymer comprises residues of hexamethylene diisocyanate, 1,4-butanediol, and caprolactone.

**8.** The thermoplastic film of any of the preceding claims, wherein the aliphatic diisocyanate comprises at least 80 mol% of one or more of 4,4'-Methylene dicyclohexyl diisocyanate, hexamethylene diisocyanate, or isophorone diisocyanate; or
wherein the aliphatic polyol of the thermoplastic polyurethane polymer has a weight average molecular weight (Mw) from 750 to 2,000, the Mw being determined according to ASTM Method D5296-11 as described in the description.

**9.** The thermoplastic film of any of the preceding claims, wherein the chain extending agent comprises a diol having from two to ten carbon atoms.

**10.** The thermoplastic film of any of the preceding claims, wherein the thermoplastic film further comprises a protective topcoat on a side of the film opposite the patterned adhesive layer.

**11.** The thermoplastic film of any of the preceding claims, wherein the copolyester polyether polymer has a Tg from -70°C to 50°C, the Tg being measured according to ASTM D3418-15 and as described in the description; or

wherein the copolyester polyether polymer has an inherent viscosity (lhV) from 0.85 to 1.40, the lhV being determined according to ASTM D4603-18; or wherein the aliphatic diacid of the copolyester polyether polymer comprises cyclohexane dicarboxylic acid; or
wherein the aliphatic diol in the copolyester polyether polymer comprises cyclohexane dimethanol.

**12.** An article coated with the thermoplastic film of any of the preceding claims, preferably

wherein the article comprises one or more of an automobile, a truck, or a train.

**13.** A method of applying the thermoplastic film of any of the preceding claims to a substrate, the method comprising:

a. exposing the patterned adhesive layer;
b. tacking the patterned adhesive layer of the thermoplastic film to at least one location on the substrate;
c. stretching the thermoplastic film and tacking the patterned adhesive layer to another location on the substrate;
d. smoothing out the thermoplastic film using one or more of a hand, a gloved hand, or a squeegee so that the thermoplastic film conforms to the substrate; and
e. wrapping the thermoplastic film around at least one edge of the substrate so as to hide an underlying color of the substrate.

**14.** The method of claim 13, wherein the thermoplastic film is heated during the method.

**15.** The method of claim 13 or 14, wherein the thermoplastic film is heated after the thermoplastic film is applied to the substrate, to accomplish one or more of: setting the film in place, reducing tension, or preventing post-application separation.

## Patentansprüche

**1.** Thermoplastische Folie, umfassend:

a. eine thermoplastische Polymerschicht, umfassend:

i. ein thermoplastisches Polyurethanpolymer, umfassend das Reaktionsprodukt von:

1. einem aliphatischen Diisocyanat,
2. einem aliphatischen Polyol und
3. einem Kettenverlängerungsmittel; und

ii. ein Copolyesterpolyetherpolymer, umfassend das Reaktionsprodukt von:

1. einer aliphatischen Disäure;
2. einem aliphatischen Diol;
3. einem aliphatischen Polyetherpolyol; und
4. einem Verzweigungsmittel,

wobei das thermoplastische Polyurethanpolymer in der thermoplastischen Polymerschicht in einer Menge von 65 bis 98 Gewichtsprozent vorhanden ist; und

b. eine strukturierte Klebeschicht,
wobei die thermoplastische Folie:

wenn sie durch einen 25 %-Wärmerelaxationstest bei einer Dicke von 0,0001524 m (0,006 Zoll) getestet wird, eine Endlast von 0,222 bis 1,334 oder von 0,445 bis 0,890 N (0,05 bis 0,30 oder von 0,10 bis 0,20 Pfund-Kraft) vorweist; und
wenn sie durch einen 25 %-Elastizitätserholungstest getestet wird, nach einer Minute eine Restdehnung von 2 % oder mehr vorweist, wobei der 25 %-Wärmerelaxationstest und der 25 %-Elastizitätserholungstest wie in der Beschreibung beschrieben bestimmt werden.

**2.** Thermoplastische Folie nach Anspruch 1, wobei die thermoplastische Folie ferner eine Farbschicht umfasst, die zwischen der thermoplastischen Schicht und der strukturierten Klebeschicht positioniert ist.

**3.** Thermoplastische Folie nach Anspruch 1, wobei die thermoplastische Folie ferner eine Farbschicht umfasst, die zwischen der thermoplastischen Schicht und einer Schutzdeckschicht positioniert ist; oder wobei die thermoplastische Folie ferner eine mit einem Pigment bereitgestellte Schutzdeckschicht umfasst, die auf der thermoplastischen Polymerschicht positioniert ist; oder

wobei die strukturierte Klebeschicht ein Pigment umfasst; oder wobei die thermoplastische Schicht ein Pigment umfasst.

**4.** Thermoplastische Folie nach Anspruch 1, wobei die thermoplastische Folie, wenn sie durch ASTM D-412 getestet wird, bei 5 % Dehnung eine Spannung von höchstens 4826,33 kPa (700 psi) vorweist; oder
wobei die thermoplastische Folie, wenn sie durch ASTM D-412 getestet wird, bei 5 % Dehnung eine Spannung von 1378,95 bis 4826,33 kPa (200 bis 700 psi) vorweist.

**5.** Thermoplastische Folie nach Anspruch 1, wobei die thermoplastische Folie, wenn sie durch einen Schlagkraftdämpfungstest getestet wird, eine gedämpfte Last vorweist und wenn sie durch ASTM D-412 getestet wird, eine Zuglast pro 0,0254 m (Zoll) bei 5 % Dehnung vorweist, und wobei ein Verhältnis der gedämpften Last zu der Zuglast pro 0,0254 m (Zoll) bei 5 % Dehnung zwischen 80:1 und 300:1 ist.

**6.** Thermoplastische Folie nach einem der vorhergehenden Ansprüche, wobei das Copolyesterpolyetherpolymer Poly(cyclohexylendimethylencyclohexandicarboxylat), Glykol und Säurecomonomer (PCCE) umfasst.

**7.** Thermoplastische Folie nach einem der vorhergehenden Ansprüche, wobei das thermoplastische Polyurethanpolymer ein weiches Segment und ein hartes Segment umfasst und wobei das weiche Segment 40 bis 50 Gewichtsprozent des thermoplastischen Polyurethanpolymers umfasst; oder

wobei das thermoplastische Polyurethanpolymer in der thermoplastischen Polymerschicht in einer Menge von 70 bis 97 Gewichtsprozent vorhanden ist; oder
wobei die thermoplastische Polyurethanschicht ferner eines oder mehrere von Folgendem umfasst: einem aliphatischen Polyether-Thermoplast-Polyurethan; Ethylen-Vinylacetat (EVA); Polyvinylchlorid; einem thermoplastischen Polyamid, einem thermoplastischen Polyolefin-Elastomer, einem thermoplastischen Styrol-Blockcopolymer; einem aromatischen thermoplastischen Copolyester-Ether-Elastomer; oder einem Polyvinylacetal; oder wobei das thermoplastische Polyurethanpolymer oder eine thermoplastische Polyurethanpolymermischung eine Tg von -30 °C bis 60 °C aufweist, wobei die Tg gemäß ASTM D3418-15 und wie in der Beschreibung beschrieben gemessen wird; oder
wobei das thermoplastische Polyurethan ein gewichtsmittleres Molekulargewicht von 50.000 Dalton bis 400.000 Dalton aufweist; oder
wobei das thermoplastische Polyurethanpolymer Rückstände von Hexamethylendiisocyanat, 1,4-Butandiol und Caprolacton umfasst.

**8.** Thermoplastische Folie nach einem der vorhergehenden Ansprüche, wobei das aliphatische Diisocyanat mindestens 80 Mol-% eines oder mehrere von 4,4'-Methylendicyclohexyldiisocyanat, Hexamethylendiisocyanat oder Isophorondiisocyanat umfasst; oder wobei das aliphatische Polyol des thermoplastischen Polyurethanpolymers ein gewichtsmittleres Molekulargewicht (Mw) von 750 bis 2.000 aufweist, wobei das Mw gemäß ASTM-Methode D5296-11 wie in der Beschreibung beschrieben bestimmt wird.

**9.** Thermoplastische Folie nach einem der vorhergehenden Ansprüche, wobei das Kettenverlängerungsmittel ein Diol, das zwei bis zehn Kohlenstoffatome aufweist, umfasst.

**10.** Thermoplastische Folie nach einem der vorhergehenden Ansprüche, wobei die thermoplastische Folie ferner eine Schutzdeckschicht auf einer der strukturierten Klebeschicht gegenüberliegenden Seite der Folie aufweist.

**11.** Thermoplastische Folie nach einem der vorhergehenden Ansprüche, wobei das Copolyesterpolyetherpolymer eine Tg von -70 °C bis 50 °C aufweist, wobei die Tg gemäß ASTM D3418-15 und wie in der Beschreibung beschrieben gemessen wird; oder
wobei das Copolyesterpolyetherpolymer eine inhärente Viskosität (IhV) von 0,85 bis 1,40 aufweist, wobei die IhV gemäß ASTM D4603-18 bestimmt wird; oder wobei die aliphatische Disäure des Copolyesterpolyetherpolymers Cyclohexandicarbonsäure umfasst; oder wobei das aliphatische Diol in dem Copolyesterpolyetherpolymer Cyclohexandimethanol umfasst.

**12.** Gegenstand, der mit der thermoplastischen Folie nach einem der vorhergehenden Ansprüche beschichtet ist, wobei der Gegenstand vorzugsweise eines oder mehrere von einem Automobil, einem Lastwagen oder einem Zug umfasst.

**13.** Verfahren zum Aufbringen der thermoplastischen Folie nach einem der vorhergehenden Ansprüche auf ein Substrat,

wobei das Verfahren Folgendes umfasst:

a. Freilegen der strukturierten Klebeschicht;
b. Anbringen der strukturierten Klebeschicht der thermoplastischen Folie an mindestens einer Stelle auf dem Substrat;
c. Dehnen der thermoplastischen Folie und Anbringen der strukturierten Klebeschicht auf eine andere Stelle auf dem Substrat;
d. Glätten der thermoplastischen Folie mithilfe einer oder mehrerer Hände, einem Handschuh oder einem Rakel, so dass sich die thermoplastische Folie dem Substrat anpasst; und
e. Umwickeln der thermoplastischen Folie um mindestens eine Kante des Substrats, um eine darunterliegende Farbe des Substrats zu verdecken.

**14.** Verfahren nach Anspruch 13, wobei die thermoplastische Folie während des Verfahrens erhitzt wird.

**15.** Verfahren nach Anspruch 13 oder 14, wobei die thermoplastische Folie nach dem Aufbringen der thermoplastischen Folie auf das Substrat erhitzt wird, um eines oder mehrere von Folgendem zu erreichen: Fixieren der Folie, Reduzieren von Spannung oder Verhindern einer Ablösung nach dem Aufbringen.

## Revendications

**1.** Film thermoplastique, comprenant :

a. une couche de polymère thermoplastique comprenant :

i. un polymère polyuréthane thermoplastique comprenant le produit de réaction :

1. d'un diisocyanate aliphatique,
2. d'un polyol aliphatique, et
3. d'un agent d'allongement de chaîne ; et

ii. un polymère polyéther de copolyester comprenant le produit de réaction :

1. d'un diacide aliphatique ;
2. d'un diol aliphatique ;
3. d'un polyol de polyéther aliphatique ; et
4. d'un agent de ramification

dans lequel le polymère polyuréthane thermoplastique est présent dans la couche de polymère thermoplastique en une quantité de 65 à 98 % en poids ; et

b. une couche adhésive à motifs,
dans laquelle le film thermoplastique :

lorsqu'il est testé par un test de relaxation thermique de 25 % à une épaisseur de 0,0001524 m (0,006 pouce), présente une charge finale de 0,222 à 1,334 ou de 0,445 à 0,890 N (0,05 à 0,30 ou de 0,10 à 0,20 livre de force) ; et
lorsqu'il est testé par un test de récupération élastique de 25 %, présente une déformation résiduelle à une minute de 2 % ou plus, le test de relaxation thermique de 25 % et le test de récupération élastique de 25 % étant déterminés tel que décrit dans la description.

**2.** Film thermoplastique selon la revendication 1, dans lequel le film thermoplastique comprend en outre une couche colorée, positionnée entre la couche thermoplastique et la couche adhésive à motifs.

**3.** Film thermoplastique selon la revendication 1, dans lequel le film thermoplastique comprend en outre une couche colorée, positionnée entre la couche thermoplastique et une couche de finition protectrice ; ou dans lequel le film thermoplastique comprend en outre une couche de finition protectrice munie d'un pigment, positionnée sur la couche de polymère thermoplastique ; ou

dans lequel la couche adhésive à motifs comprend un pigment ; ou
dans lequel la couche thermoplastique comprend un pigment.

**4.** Film thermoplastique selon la revendication 1, dans lequel le film thermoplastique, lorsqu'il est testé selon la norme ASTM D-412, présente une contrainte à 5 % de déformation inférieure ou égale à 4 826,33 kPa (700 psi) ; ou dans lequel le film thermoplastique, lorsqu'il est testé selon la norme ASTM D-412, présente une contrainte à 5 % de déformation de 1 378,95 à 4 826,33 kPa (200 à 700 psi).

**5.** Film thermoplastique selon la revendication 1, dans lequel le film thermoplastique, lorsqu'il est testé par un test d'atténuation de la force d'impact, présente une charge atténuée, et lorsqu'il est testé selon la norme ASTM D-412, présente une charge de traction par 0,0254 m (pouce) à 5 % de déformation, et dans lequel le rapport de la charge atténuée à la charge de traction par 0,0254 m (pouce) à 5 % de déformation est de 80:1 à 300:1.

**6.** Film thermoplastique selon l'une quelconque des revendications précédentes, dans lequel le polymère polyéther de copolyester comprend du poly(cyclohexylène diméthylène cyclohexanedicarboxylate), du glycol et un co-monomère acide (PCCE).

**7.** Film thermoplastique selon l'une quelconque des revendications précédentes, dans lequel le polymère polyuréthane thermoplastique comprend un segment souple et un segment rigide, et dans lequel le segment souple représente de 40 à 50 % en poids du polymère polyuréthane thermoplastique ; ou

dans lequel le polymère polyuréthane thermoplastique est présent dans la couche de polymère thermoplastique en une quantité de 70 à 97 % en poids ; ou
dans lequel la couche de polyuréthane thermoplastique comprend en outre un ou plusieurs des éléments suivants : un polyuréthane thermoplastique polyéther aliphatique ; de l'acétate d'éthylène-vinyle (EVA) ; du polychlorure de vinyle ; un polyamide thermoplastique, un élastomère polyoléfine thermoplastique, un copolymère séquencé styrène thermoplastique ; un élastomère copolyester éther thermoplastique aromatique ; ou un acétal de polyvinyle ; ou dans lequel le polymère de polyuréthane thermoplastique ou le mélange de polymères de polyuréthane thermoplastique présente une Tg comprise entre -30 °C et 60 °C, la Tg étant mesurée conformément à la norme ASTM D3418-15 et telle que décrite dans la description ; ou
dans lequel le polyuréthane thermoplastique a une masse moléculaire moyenne en poids comprise 50 000 et 400 000 daltons ; ou
dans lequel le polymère de polyuréthane thermoplastique comprend des résidus d'hexaméthylène diisocyanate, de 1,4-butanediol et de caprolactone.

**8.** Film thermoplastique selon l'une quelconque des revendications précédentes, dans lequel le diisocyanate aliphatique comprend au moins 80 % molaires d'un ou plusieurs des composés suivants : 4,4'-méthylène dicyclohexyle diisocyanate, hexaméthylène diisocyanate ou isophorone diisocyanate ; ou
dans lequel le polyol aliphatique du polymère de polyuréthane thermoplastique a un poids moléculaire moyen (Mw) de 750 à 2 000, le Mw étant déterminé selon la Méthode ASTM D5296-11 telle que décrite dans la description.

**9.** Film thermoplastique selon l'une quelconque des revendications précédentes, dans lequel l'agent d'allongement de chaîne comprend un diol ayant de deux à dix atomes de carbone.

**10.** Film thermoplastique selon l'une quelconque des revendications précédentes, dans lequel le film thermoplastique comprend en outre une couche de finition protectrice sur une face du film opposée à la couche adhésive à motifs.

**11.** Film thermoplastique selon l'une quelconque des revendications précédentes, dans lequel le polymère polyéther de copolyester présente une Tg comprise entre -70 °C et 50 °C, la Tg étant mesurée conformément à la norme ASTM D3418-15 et telle que décrite dans la description ; ou
dans lequel le polymère polyéther de copolyester a une viscosité intrinsèque (IhV) de 0,85 à 1,40, la IhV étant déterminée selon la norme ASTM D4603-18 ; ou dans lequel le diacide aliphatique du polymère polyéther de copolyester comprend de l'acide cyclohexane dicarboxylique ; ou dans lequel le diol aliphatique du polymère polyéther de copolyester comprend du cyclohexane diméthanol.

**12.** Article revêtu du film thermoplastique selon l'une quelconque des revendications précédentes, de préférence dans lequel l'article comprend un ou plusieurs d'une automobile, d'un camion ou d'un train.

**13.** Procédé d'application du film thermoplastique selon l'une quelconque des revendications précédentes sur un substrat, le procédé comprenant :

a. l'exposition de la couche adhésive à motifs ;
b. la fixation de la couche adhésive à motifs du film thermoplastique à au moins un emplacement sur le substrat ;
c. l'étirement du film thermoplastique et la fixation de la couche adhésive à motifs sur un autre emplacement du substrat ;
d. le lissage du film thermoplastique à l'aide d'une ou plusieurs mains (main, main gantée ou raclette) afin que le film thermoplastique épouse la forme du substrat ; et
e. l'enroulement du film thermoplastique autour d'au moins un bord du substrat de manière à masquer la couleur sous-jacente de celui-ci.

**14.** Procédé selon la revendication 13, dans lequel le film thermoplastique est chauffé au cours du procédé.

**15.** Procédé selon la revendication 13 ou 14, dans lequel le film thermoplastique est chauffé après son application sur le substrat, afin de réaliser une ou plusieurs des actions suivantes : la fixation du film en place, la réduction de la tension ou l'empêchement de la séparation après application.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2953792 B1
- US 10265932 B
- US 2282057 A
- US 2282026 A
- US 5137954 A
- US 4349469 A
- US 4939009 A


### Non-patent literature cited in the description


- Vinyl Acetal Polymers. **WADE, B**. Encyclopedia of Polymer Science and Technology. John Wiley & Sons, Inc., 2016, 1-22